(19) Europäisches Patentamt / European Patent Office / Office européen des brevets

(11) EP 2 219 262 A1

(12) **EUROPEAN PATENT APPLICATION**
published in accordance with Art. 153(4) EPC

(43) Date of publication:
**18.08.2010 Bulletin 2010/33**

(21) Application number: **09824804.0**

(22) Date of filing: **28.10.2009**

(51) Int Cl.:
***H01M 14/00*** (2006.01) ***H01L 31/04*** (2006.01)

(86) International application number:
**PCT/JP2009/068859**

(87) International publication number:
**WO 2010/053105 (14.05.2010 Gazette 2010/19)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **05.11.2008 JP 2008284479**

(71) Applicant: **Sony Corporation**
**Tokyo 108-0075 (JP)**

(72) Inventors:
- **YONEYA, Reiko**
**Tokyo 1080075 (JP)**
- **ORIHASHI, Masaki**
**Tokyo 1080075 (JP)**
- **SUZUKI, Yusuke**
**Tokyo 1080075 (JP)**
- **MOROOKA, Masahiro**
**Toyko 1080075 (JP)**

(74) Representative: **Scaddan, Gareth Casey et al**
**D Young & Co LLP**
**120 Holborn**
**London EC1N 2DY (GB)**

(54) **DYE-SENSITIZED SOLAR CELL AND PROCESS FOR PRODUCING SAME**

(57) There are provided a dye-sensitized solar cell that achieves high photoelectric conversion efficiency, can be manufactured at low cost, and has excellent design properties and a method for manufacturing the dye-sensitized solar cell.

Dye-carrying porous titanium oxide layers (2a to 2d) are formed on a transparent conductive substrate (1) such that a desired color is produced and a desired pattern is formed by selecting the type of a sensitizing dye, the thickness, the stacked structure, the particle size of the titanium oxide fine particles or, if the titanium oxide fine particles are composed of at least two types of titanium oxide fine particles having different particle sizes, the combination ratio of the at least two types of titanium oxide fine particles. The transparent conductive substrate (1) on which the dye-carrying porous titanium oxide layers (2a to 2d) have been formed and a transparent conductive substrate (3) on which a counter electrode (4) has been formed are bonded to each other through a sealant (5) such that the dye-carrying porous titanium oxide layers (2a to 2d) face the counter electrode (4). An electrolyte layer (6) is enclosed in the space between the dye-carrying porous titanium oxide layers (2a to 2d) and the counter electrode (4) and thus a dye-sensitized solar cell is manufactured.

FIG. 1

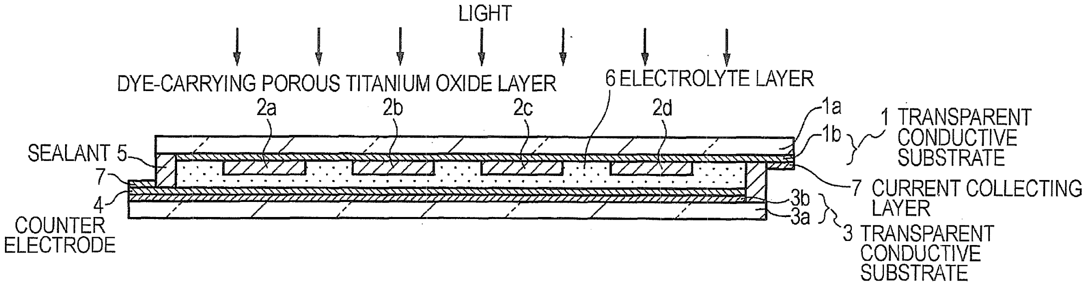


EP 2 219 262 A1

## Description

### Technical Field

The present invention relates to a dye-sensitized solar cell and a method for manufacturing the same, and particularly to a dye-sensitized solar cell suitably installed in a public place and a method for manufacturing the same.

### Background Art

Since solar cells that are photoelectric transducers which convert sunlight into electric energy use the sunlight as an energy source, the effects on the global environment are significantly low and it is expected that solar cells further become widespread.

Crystalline silicon solar cells that use monocrystalline or polycrystalline silicon and amorphous silicon solar cells have been mainly used as solar cells.

On the other hand, a dye-sensitized solar cell proposed by Grätzel et al. in 1991 attracts attention because the dye-sensitized solar cells can achieve high photoelectric conversion efficiency and does not require large-scale equipment for the manufacturing unlike known silicon solar cells and thus can be manufactured at low cost (e.g., refer to Non Patent Literature 1).

The dye-sensitized solar cells generally have a structure in which a dye-sensitized porous semiconductor layer obtained by causing a porous semiconductor layer composed of titanium oxide or the like and formed on a transparent conductive substrate to carry a sensitizing dye is disposed so as to face a counter electrode obtained by forming a platinum layer or the like on a substrate; the periphery thereof is sealed with a sealant; and a space between the electrodes is filled with an electrolyte containing oxidizing and reducing species such as iodine and iodide ions.

### Citation List

Non Patent Literature

NPL 1: Nature, 353, p. 737 (1991)

### Summary of Invention

When a dye-sensitized solar cell is installed in a public place, it is believed that a dye-sensitized solar cell with excellent design properties allows observers to feel comfortable, which is preferable.

However, as far as the inventors of the present invention know, it has not been proposed that design properties be provided to a dye-sensitized solar cell from this point of view.

Accordingly, an object of the present invention is to provide a dye-sensitized solar cell that achieves high photoelectric conversion efficiency, can be manufactured at low cost, and has excellent design properties and a method for manufacturing the dye-sensitized solar cell.

To solve the problem described above, the first invention provides a dye-sensitized solar cell including:

a transparent conductive substrate;
a single or a plurality of porous titanium oxide layers that are formed on the transparent conductive substrate, are composed of titanium oxide fine particles, and carry a sensitizing dye;
a counter electrode formed so as to face the porous titanium oxide layers; and
an electrolyte layer formed between the porous titanium oxide layers and the counter electrode,
wherein the porous titanium oxide layers are formed such that a desired color is produced by selecting a type of the sensitizing dye, a thickness, a stacked structure, a particle size of the titanium oxide fine particles or, if the titanium oxide fine particles are composed of at least two types of titanium oxide fine particles having different particle sizes, a combination ratio of the at least two types of titanium oxide fine particles.

The second invention provides a method for manufacturing a dye-sensitized solar cell including:

a step of screen printing a paste in which titanium oxide fine particles are dispersed on a transparent conductive substrate once or multiple times in the same pattern or in different patterns;
a step of forming a single or a plurality of porous titanium oxide layers by firing the paste;
a step of causing the porous titanium oxide layers to carry a sensitizing dye;
a step of forming a counter electrode that faces the porous titanium oxide layers; and
a step of forming an electrolyte layer between the porous titanium oxide layers and the counter electrode,
wherein the porous titanium oxide layers are formed such that a desired color is produced by selecting a type of the sensitizing dye, a thickness, a stacked structure, a particle size of the titanium oxide fine particles or, if the titanium oxide fine particles are composed of at least two types of titanium oxide fine particles having different particle sizes, a combination ratio of the at least two types of titanium oxide fine particles.

In the first and second invention, the porous titanium oxide layers may be optionally formed such that a desired color is produced and a desired pattern is formed by selecting the type of the sensitizing dye, the thickness, the stacked structure, the particle size of the titanium oxide fine particles or, if the titanium oxide fine particles are composed of at least two types of titanium oxide fine particles having different particle sizes, the combination ratio of the at least two types of titanium oxide fine particles.

The third invention provides a dye-sensitized solar cell including:

a transparent conductive substrate;
a single or a plurality of porous semiconductor oxide layers that are formed on the transparent conductive substrate, are composed of semiconductor oxide fine particles, and carry a sensitizing dye;
a counter electrode formed so as to face the porous semiconductor oxide layers; and
an electrolyte layer formed between the porous semiconductor oxide layers and the counter electrode,
wherein the porous semiconductor oxide layers are formed such that a desired color is produced by selecting a type of the sensitizing dye, a thickness, a stacked structure, a particle size of the semiconductor oxide fine particles or, if the semiconductor oxide fine particles are composed of at least two types of semiconductor oxide fine particles having different particle sizes, a combination ratio of the at least two types of semiconductor oxide fine particles.

The fourth invention provides a method for manufacturing a dye-sensitized solar cell including:

a step of screen printing a paste in which semiconductor oxide fine particles are dispersed on a transparent conductive substrate once or multiple times in the same pattern or in different patterns;
a step of forming a single or a plurality of porous semiconductor oxide layers by firing the paste;
a step of causing the porous semiconductor oxide layers to carry a sensitizing dye;
a step of forming a counter electrode that faces the porous semiconductor oxide layers; and
a step of forming an electrolyte layer between the porous semiconductor oxide layers and the counter electrode,
wherein the porous semiconductor oxide layers are formed such that a desired color is produced by selecting a type of the sensitizing dye, a thickness, a stacked structure, a particle size of the semiconductor oxide fine particles or, if the semiconductor oxide fine particles are composed of at least two types of semiconductor oxide fine particles having different particle sizes, a combination ratio of the at least two types of semiconductor oxide fine particles.

In the third and fourth invention, the porous semiconductor oxide layers may be optionally formed such that a desired color is produced and a desired pattern is formed by selecting the type of the sensitizing dye, the thickness, the stacked structure, the particle size of the semiconductor oxide fine particles or, if the semiconductor oxide fine particles are composed of at least two types of semiconductor oxide fine particles having different particle sizes, the combination ratio of the at least two types of semiconductor oxide fine particles.

Examples of a material of the semiconductor oxide fine particles constituting the porous semiconductor oxide layers include titanium oxide ($TiO_2$), zinc oxide ($ZnO$), tungsten oxide ($WO_3$), niobium oxide ($Nb_2O_5$), strontium titanium oxide ($TiSrO_3$), and tin oxide ($SnO_2$). Among these, anatase-type titanium oxide is particularly preferred. The type of semiconductor oxide is not limited thereto, and these materials can be used in combination. Furthermore, the semiconductor oxide fine particles can optionally have various forms such as a particulate shape, a tubular shape, and a rod-like shape.

Normally, the semiconductor oxide fine particles preferably have an average primary particle size of 1 to 200 nm and particularly preferably 5 to 100 nm. Furthermore, semiconductor oxide fine particles having an average particle size larger than the above-described average particle size can be added to the semiconductor oxide fine particles having the above-described average particle size, whereby incident light is scattered by the semiconductor oxide fine particles having a larger average particle size to improve the quantum yield. In this case, the additional semiconductor oxide fine particles preferably have an average particle size of 20 to 500 nm.

In the dye-sensitized solar cell of the present invention having such a structure, the porous titanium oxide layers or the porous semiconductor oxide layers can produce a desired color by selecting the type of the sensitizing dye carried on the titanium oxide fine particles or the semiconductor oxide fine particles, the thickness of the porous titanium oxide layers or the porous semiconductor oxide layers, the stacked structure, the particle size of the titanium oxide fine particles or the semiconductor oxide fine particles or, if the titanium oxide fine particles or the semiconductor oxide fine particles are composed of at least two types of titanium oxide fine particles or semiconductor oxide fine particles having different particle sizes, the combination ratio of the at least two types of titanium oxide fine particles or the semiconductor oxide fine particles.

Furthermore, a desired pattern can be formed using the pattern and arrangement of the porous titanium oxide layers or the porous semiconductor oxide layers if necessary. In other words, in the present invention, a desired color design can be displayed using the porous titanium oxide layers or the porous semiconductor oxide layers.

According to the present invention, there can be realized a dye-sensitized solar cell having excellent design properties achieved through the display of a desired color or color design, in addition to high photoelectric conversion efficiency and low manufacturing cost that have been achieved by publicly known dye-sensitized solar cells.

Brief Description of Drawings

[Fig. 1] Fig. 1 is a sectional view of a dye-sensitized solar cell according to a first embodiment of the present invention.

[Fig. 2] Fig. 2 is a plan view of the dye-sensitized solar cell according to the first embodiment of the present invention.

[Fig. 3] Fig. 3 is a plan view of the dye-sensitized solar cell according to the first embodiment of the present invention when the dye-sensitized solar cell is viewed from the transparent conductive layer side of a transparent conductive substrate on which dye-sensitized porous titanium oxide layers are to be formed.

[Fig. 4] Fig. 4 is a plan view of the dye-sensitized solar cell according to the first embodiment of the present invention when the dye-sensitized solar cell is viewed from the transparent conductive layer side of a transparent conductive substrate on which a counter electrode is to be formed.

[Fig. 5] Fig. 5 is a sectional view for describing a method for manufacturing the dye-sensitized solar cell according to the first embodiment of the present invention.

[Fig. 6] Fig. 6 is a schematic line diagram for describing a method for controlling a color produced using dye-carrying porous titanium oxide layers included in the dye-sensitized solar cell according to the first embodiment of the present invention.

[Fig. 7] Fig. 7 is a schematic line diagram for describing a method for controlling a color produced using the dye-carrying porous titanium oxide layers included in the dye-sensitized solar cell according to the first embodiment on the present invention.

[Fig. 8] Fig. 8 is a schematic line diagram for describing a method for controlling a color produced using the dye-carrying porous titanium oxide layers included in the dye-sensitized solar cell according to the first embodiment of the present invention.

[Fig. 9] Fig. 9 is a schematic line diagram for describing a method for controlling a color produced using the dye-carrying porous titanium oxide layers included in the dye-sensitized solar cell according to the first embodiment of the present invention.

[Fig. 10] Fig. 10 is a schematic line diagram for describing a method for controlling a color produced using the dye-carrying porous titanium oxide layers included in the dye-sensitized solar cell according to the first embodiment of the present invention.

[Fig. 11] Fig. 11 is a schematic line diagram for describing a method for controlling a color produced using the dye-carrying porous titanium oxide layers included in the dye-sensitized solar cell according to the first embodiment of the present invention.

[Fig. 12] Fig. 12 is a schematic line diagram for describing a method for controlling a color produced using the dye-carrying porous titanium oxide layers included in the dye-sensitized solar cell according to the first embodiment of the present invention.

[Fig. 13] Fig. 13 is a schematic line diagram for describing a method for controlling a color produced using the dye-carrying porous titanium oxide layers included in the dye-sensitized solar cell according to the first embodiment of the present invention.

[Fig. 14] Fig. 14 is a schematic line diagram for describing a method for controlling a color produced using the dye-carrying porous titanium oxide layers included in the dye-sensitized solar cell according to the first embodiment of the present invention.

[Fig. 15] Fig. 15 is a schematic line diagram for describing a method for controlling a color produced using the dye-carrying porous titanium oxide layers included in the dye-sensitized solar cell according to the first embodiment of the present invention.

[Fig. 16] Fig. 16 is a schematic line diagram for describing a method for controlling a color produced using the dye-carrying porous titanium oxide layers included in the dye-sensitized solar cell according to the first embodiment of the present invention.

[Fig. 17] Fig. 17 is a schematic line diagram for describing a method for controlling a color produced using the dye-carrying porous titanium oxide layers included in the dye-sensitized solar cell according to the first embodiment of the present invention.

[Fig. 18] Fig. 18 is a schematic line diagram for describing a method for controlling a color produced using the dye-carrying porous titanium oxide layers included in the dye-sensitized solar cell according to the first embodiment of the present invention.

[Fig. 19] Fig. 19 is a schematic line diagram for describing a method for controlling a color produced using the dye-carrying porous titanium oxide layers included in the dye-sensitized solar cell according to the first embodiment of the present invention.

[Fig. 20] Fig. 20 is a schematic line diagram for describing a method for controlling a color produced using the dye-carrying porous titanium oxide layers included in the dye-sensitized solar cell according to the first embodiment of the present invention.

[Fig. 21] Fig. 21 is a sectional view of a dye-sensitized solar cell according to a third embodiment of the present invention.

[Fig. 22] Fig. 22 is a sectional view showing a structure of a light-amount adjusting plate disposed on a light-receiving surface in the dye-sensitized solar cell according to the third embodiment of the present invention.

Description of Embodiments

Hereinafter, best modes for carrying out the invention (hereinafter referred to as embodiments) will be described.

Note that the embodiments are described in the following order.

1. First embodiment (dye-sensitized solar cell and method for manufacturing the same)
2. Second embodiment (dye-sensitized solar cell)
3. Third embodiment (dye-sensitized solar cell)

<1. First embodiment>

[Structure of dye-sensitized solar cell]

Fig. 1 is a sectional view showing a dye-sensitized solar cell according to a first embodiment. Fig. 2 is a plan view of the dye-sensitized solar cell. Fig. 1 is a sectional view taken along line X-X of Fig. 2.

As shown in Figs. 1 and 2, in this dye-sensitized solar cell, a plurality of dye-carrying porous titanium oxide layers each having a desired pattern are formed on a transparent conductive layer 1b of a transparent conductive substrate 1 obtained by forming the transparent conductive layer 1b on a transparent substrate 1a. The type of sensitizing dye carried by the dye-carrying porous titanium oxide layers and the number, shape, and arrangement of the dye-carrying porous titanium oxide layers are determined in accordance with the color or the color and pattern to be displayed on a light-receiving surface of the dye-sensitized solar cell. Herein, it is assumed that, for example, four dye-carrying porous titanium oxide layers 2a to 2d are formed. The shape and arrangement of the dye-carrying porous titanium oxide layers 2a to 2d shown in Figs. 1 and 2 are merely schematically illustrated examples and are not particularly limited. On the other hand, a counter electrode 4 is formed on a transparent conductive layer 3b of a transparent conductive substrate 3 obtained by forming the transparent conductive layer 3b on a transparent substrate 3a. Furthermore, the transparent conductive substrate 1 and the transparent conductive substrate 3 are bonded to each other and sealed with a sealant 5 at the periphery of a region sandwiched therebetween while the transparent conductive substrate 1 on which the dye-carrying porous titanium oxide layers 2a to 2d are formed faces the transparent conductive substrate 3 on which the counter electrode 4 is formed such that there is a certain distance between the dye-carrying porous titanium oxide layers 2a to 2d and the counter electrode 4. The distance between the dye-carrying porous titanium oxide layers 2a to 2d and the counter electrode 4 is, for example, 1 to 100 μm, typically several tens of micrometers to 100 μm, and preferably 1 to 50 μm. A space enclosed by the counter electrode 4, the sealant 5, and the transparent conductive layer 1b on which the dye-carrying porous titanium oxide layers 2a to 2d are formed is filled with an electrolyte layer 6. In this case, the light-receiving surface is a surface of the transparent conductive substrate 1 opposite the surface on which the dye-carrying porous titanium oxide layers 2a to 2d are formed.

The transparent conductive substrates 1 and 3 each have the same planar shape of a square or a rectangle. In this case, as shown in Figs. 1 and 2, when an x axis and a Y axis are taken to be in directions parallel to two sides, of the transparent conductive substrates 1 and 3, that are orthogonal to each other, the transparent conductive substrates 1 and 3 are displaced from each other by a width a in the x axis direction and a width b in the y axis direction. For example, when the transparent conductive substrates 1 and 3 each have a square planar shape, the transparent conductive substrates 1 and 3 are displaced from each other in a direction of one of diagonal lines, and a = b is satisfied. Current collecting layers 7 are formed on portions of the transparent conductive layers 1b and 3b, of the transparent conductive substrates 1 and 3, that are located outside the sealant 5. The current collecting layers 7 are used for allowing connection to external leads or used when dye-sensitized solar cells are connected to each other.

Fig. 3 shows a surface on the transparent conductive layer 1b side of the transparent conductive substrate 1. As shown in Fig. 3, the transparent conductive layer 1b is removed from an elongated region having widths a and b and located on the two sides, of the transparent conductive substrate 1, that are orthogonal to each other. The transparent substrate 1a is exposed in that region. In addition, a portion of the sealant 5 located along the two sides of the transparent conductive substrate 1 is attached to the exposed region on the transparent substrate 1a (refer to Fig. 1). Fig. 4 shows a surface on the transparent conductive layer 3b side of the transparent conductive substrate 3. As shown in Fig. 4, the transparent conductive layer 3b is removed from an elongated region having widths a and b and located on the two sides, of the transparent conductive substrate 3, that are orthogonal to each other. The transparent substrate 3a is exposed in that region. In addition, a portion of the sealant 5 located along the two sides of the transparent conductive substrate 3 is attached to the exposed region on the transparent substrate 3a (refer to Fig. 1). Although not shown in Fig. 4, the counter electrode 4 also has the same planar shape as that of the transparent conductive layer 3b (refer to Fig. 1). A filling hole 8 that is used to inject the electrolyte layer 6 and is to be filled in the end is formed on one of the corners of the transparent conductive substrate 3.

The materials of the transparent substrate 1a of the transparent conductive substrate 1 and the transparent substrate 3a of the transparent conductive substrate 3 are not particularly limited, and various materials having transparency can be used. The transparent substrates 1a and 3a preferably have properties of blocking water and gas that infiltrate from outside the dye-sensitized solar cell, solvent resistance, weather resistance, and the like. Examples of the transparent substrates 1a and 3a include transparent inorganic substrates composed of a material such as quartz, sapphire, or glass and transparent plastic substrates composed of a material such as polyethylene terephthalate, polyethylene naphthalate, polycarbonate, polystyrene, polyethylene, polypropylene, polyphenylene sulfide, polyvinylidene fluoride, tetraacetyl cellulose, phenoxy bromide, aramids, polyimides, polystyrenes, polyarylates, polysulfones, or polyolefins. Among these, a substrate particularly having a high transmittance in a visible light region is preferred, but the transparent substrates 1a and 3a are not limited to such a substrate. The thicknesses of the transparent substrates 1a and 3a are not particularly limited, and are freely determined in accordance with transmittance of light, blocking properties from the outside to the inside of the dye-sensitized solar cell, and the like.

The surface resistances (sheet resistances) of the transparent conductive substrates 1 and 3 are preferably as low as possible. Specifically, the surface resistances of the transparent conductive substrates 1 and 3 are each preferably 500 Ω/sq or less, more preferably 100 Ω/sq. A publicly known material can be used as a material of the transparent conductive layer 1b of the transparent conductive substrate 1 and the transparent conductive layer 3b of the transparent conductive substrate 3. Examples of the material of the transparent conductive layers 1b and 3b include indium tin oxide (ITO), fluorine-doped $SnO_2$ (FTO), antimony-doped $SnO_2$ (ATO), $SnO_2$, ZnO, and indium zinc oxide (IZO). However, the material of the transparent conductive layers 1b and 3b is not limited thereto, and the above-described materials may be used in combination.

The sensitizing dye of the dye-carrying porous titanium oxide layers 2a to 2d is not particularly limited as long as it exhibits sensitization. The sensitizing dye preferably has an acid functional group that adsorbs to a porous titanium oxide layer. Specifically, the sensitizing dye preferably has a carboxy group, a phosphoric acid group, or the like, and particularly preferably has a carboxy group. Examples of the sensitizing dye include xanthene dyes such as rhodamine B, rose bengal, eosin, and erythrocin; cyanine dyes such as merocyanine, quinocyanine, and cryptocyanine; basic dyes such as phenosafranine, Cabri blue, thiocine, and methylene blue; porphyrin compounds such as chlorophyll, zinc porphyrin, magnesium porphyrin; azo dyes; phthalocyanine compounds; coumarin compounds; bipyridine complexes; anthraquinone dyes; and polycyclic quinone dyes. Among these, a metal complex dye whose ligand contains a pyridine ring or an imidazolium ring, the metal being at least one metal selected from the group consisting of Ru, Os, Ir, Pt, Co, Fe, and Cu is preferred due to its high quantum yield. In particular, dye molecules having cisbis(isothiocyanate)-N,N-bis(2,2'-dipyridyl-4,4'-dicarboxylic acid)-ruthenium(II) or tris(isothiocyanate)-ruthenium(II)-2,2':6',2"-terpyridine-4,4',4"-tricarboxylic acid as a fundamental skeleton are preferred due to their wide absorption wavelength range. However, the sensitizing dye is not limited thereto. Typically, one of these sensitizing dyes is used, but the sensitizing dyes may be used in combination.

A method in which the sensitizing dye is caused to adsorb to the porous titanium oxide layer is not particularly limited. For example, the above-described sensitizing dye is dissolved in a solvent such as an alcohol, a nitrile, nitromethane, a halogenated hydrocarbon, an ether, dimethyl sulfoxide, an amide, N-methylpyrrolidone, 1,3-dimethylimidazolidinone, 3-methyloxazolidinone, an ester, a carbonic acid ester, a ketone, a hydrocarbon, and water, and the porous titanium oxide layer can be immersed in the resultant dye solution. Alternatively, the resultant dye solution can be applied to the porous titanium oxide layer. Furthermore, deoxycholic acid or the like may be added to suppress the association between sensitizing dye molecules. Moreover, an ultraviolet absorber can be optionally added.

After the sensitizing dye is caused to adsorb, the surface of the porous titanium oxide layer may be processed using amines to facilitate the removal of the sensitizing dye that has excessively adsorbed. Examples of the amines include pyridine, 4-tert-butylpyridine, and polyvinyl pyridine. When the amines are in a liquid state, they can be used directly or they can be dissolved in an organic solvent and then used.

Any conductive material can be used for the counter electrode 4. Even an insulating material can also be used as long as a conducive catalyst layer is formed on a surface, of the counter electrode 4, that faces the dye-carrying porous titanium oxide layers 2a to 2d. The counter electrode 4 is preferably composed of an electrochemically stable material, such as platinum, gold, carbon, or a conductive polymer. Furthermore, to improve a catalyst effect of oxidation-reduction, the surface, of the counter electrode 4, that faces the dye-carrying porous titanium oxide layers 2a to 2d preferably has a microstructure so as to have a large surface area. For example, platinum in a platinum black state or carbon in a porous state is desirably used. The platinum black state can be obtained by, for example, anodic oxidation of platinum or reduction of a platinum compound. The carbon in a porous state can be obtained by sintering of carbon fine particles or firing of an organic polymer. Alternatively, the counter electrode 4 having transparency can be formed by providing a wire composed of a metal such as platinum having a high oxidation-reduction catalyst effect on the transparent conductive substrate 3 or by subjecting the surface to reduction treatment with a platinum compound.

The material of the sealant 5 is not particularly limited, and a material having light resistance, insulating properties, and moisture resistance is preferably used. Examples of the material of the sealant 5 include epoxy resins, ultraviolet curable resins, acrylic resins, polyisobutylene resins, EVA (ethylene vinyl acetate), ionomer resins, ceramic, and various heat-sealing films.

A publicly known electrolyte layer can be used as the electrolyte layer 6. Examples of a material constituting the electrolyte layer 6 include a combination of iodine ($I_2$) and a metal iodide or an organic iodide and a

combination of bromine ($Br_2$) and a metal bromide or an organic bromide. Other examples of the material constituting the electrolyte layer 6 include metal complexes such as ferrocyanic acid salt/ferricyanic acid salt and ferrocene/ferricinium ion; sulfur compounds such as sodium polysulfide and alkylthiol/alkyl disulfide; viologen dyes; and hydroquinone/quinone. For the metal compounds, a cation of Li, Na, K, Mg, Ca, Cs, or the like is preferably used. For the organic compounds, a cation of a quaternary ammonium compound such as a tetraalkylammonium, pyridinium, and imidazolium is preferably used. However, the cations are not limited thereto, and the cations can be used in combination. Among these, an electrolyte obtained by combining $I_2$ with LiI, NaI, or a quaternary ammonium compound such as imidazolium iodide is preferably used. The concentration of the electrolyte salt in a solvent is preferably 0.05 to 10 M, more preferably 0.05 to 5 M, and more preferably 0.2 to 3 M. The concentration of $I_2$ or $Br_2$ is preferably 0.0005 to 1 M, more preferably 0.001 to 0.5 M, and more preferably 0.001 to 0.3 M. Furthermore, to improve an open-circuit voltage of the dye-sensitized solar cell, an additive such as 4-tert-butylpyridine or benzimidazolium can be added.

Non-limiting examples of a solvent constituting the electrolyte composition include water, alcohols, ethers, esters, carbonic acid esters, lactones, carboxylic acid esters, phosphoric acid trimesters, heterocyclic compounds, nitriles, ketones, amides, nitromethane, halogenated hydrocarbons, dimethyl sulfoxide, sulfolane, N-methylpyrrolidone, 1,3-dimethylimidazolidinone, 3-methyloxazolidinone, and hydrocarbons. Furthermore, these solvents can be used in combination. Moreover, an ionic liquid of a tetraalkyl-, pyridinium-, or imidazolium-quaternary ammonium salt can also be used as the solvent.

To suppress the liquid leakage of the dye-sensitized solar cell and the volatilization of the electrolyte, a gelling agent, a polymer, a cross-linking monomer, or the like can be dissolved in the above-described electrolyte composition or a gel electrolyte obtained by dispersing inorganic ceramic particles can be used. Regarding the ratio between a gel matrix and the electrolyte composition, a large amount of the electrolyte composition increases ion conductivity but decreases mechanical strength. In contrast, an excessively small amount of the electrolyte composition increases mechanical strength but decreases ion conductivity. Therefore, the amount of the electrolyte composition is preferably 50 to 99 wt% and more preferably 80 to 97 wt% relative to that of the gel electrolyte. Furthermore, an all solid-state dye-sensitized solar cell can be realized by dissolving the electrolyte and a plasticizer in a polymer and by removing the plasticizer through volatilization.

In this dye-sensitized solar cell, the dye-carrying porous titanium oxide layers 2a to 2d are formed such that a desired color is produced by selecting the type of sensitizing dye, the thickness, the stacked structure, the particle size of titanium oxide fine particles or, if the titanium oxide fine particles are composed of at least two types of titanium oxide fine particles having different particle sizes, the combination ratio of the at least two types of titanium oxide fine particles, in accordance with the color provided to a pattern displayed on the light-receiving surface of the dye-sensitized solar cell. A method for controlling the color produced using the dye-carrying porous titanium oxide layers 2a to 2d will be described in detail later.

[Method for manufacturing dye-sensitized solar cell]

Next, a method for manufacturing the dye-sensitized solar cell will be described.

First, as shown in Fig. 3, the transparent conductive layer 1b is removed from a region along two sides, of the transparent conductive substrate 1, that are orthogonal to each other to expose the transparent substrate 1a in that region.

Subsequently, a paste obtained by dispersing titanium oxide fine particles having an appropriate particle size is applied to the transparent conductive layer 1b of the transparent conductive substrate 1 an appropriate number of times at an appropriate thickness in accordance with the pattern of the dye-carrying porous titanium oxide layers 2a to 2d to be formed and the color to be produced using the dye-carrying porous titanium oxide layers 2a to 2d.

Figs. 5A to 5D show an example of a sequential application of pastes $P_1$ to $P_4$ corresponding to the dye-carrying porous titanium oxide layers 2a to 2d. However, the order of the application of the pastes $P_1$ to $P_4$ is not limited.

Next, the transparent conductive substrate 1 to which the pastes $P_1$ to $P_4$ have been applied in an appropriate pattern as described above is fired at a temperature of, for example, 450 to 650°C to sinter the titanium oxide fine particles.

Subsequently, the titanium oxide fine particles are caused to carry a sensitizing dye by, for example, immersing, in a dye solution, the transparent conductive substrate 1 in which the titanium oxide fine particles have been sintered. Thus, the dye-carrying porous titanium oxide layers 2a to 2d are formed.

On the other hand, as shown in Fig. 4, after the counter electrode 4 is formed on the transparent conductive layer 3b of the transparent conductive substrate 3, the counter electrode 4 and the transparent conductive layer 3b are removed from a region along two sides, of the transparent conductive substrate 3, that are orthogonal to each other to expose the transparent substrate 3a in that region.

Subsequently, the transparent conductive substrate 1 and the transparent conductive substrate 3 are arranged such that the dye-carrying porous titanium oxide layers 2a to 2d and the counter electrode 4 face each other so as to have a certain distance therebetween, for example, 1 to 100 $\mu$m and preferably 1 to 50 $\mu$m while

the transparent conductive substrate 1 is displaced from the transparent conductive substrate 3 by a width a in the x axis direction and a width b in the y axis direction. A space in which the electrolyte layer 6 is to be enclosed and sealed with the sealant 5 is formed, and the electrolyte layer 6 is injected into the space, for example, through the filling hole 8 formed in the transparent conductive substrate 3 in advance. After that, the filling hole 8 is filled. Thus, an intended dye-sensitized solar cell is manufactured.

[Operation of dye-sensitized solar cell]

Next, an operation of the dye-sensitized solar cell will be described.

Light that has entered the light-receiving surface of the transparent conductive substrate 1 enters the dye-carrying porous titanium oxide layers 2a to 2d through the transparent conductive substrate 1. The light that has entered the dye-carrying porous titanium oxide layers 2a to 2d excites the sensitizing dye of the dye-carrying porous titanium oxide layers 2a to 2d and thus electrons are generated. The electrons are immediately supplied from the sensitizing dye to the titanium oxide fine particles of the dye-carrying porous titanium oxide layers 2a to 2d. On the other hand, the sensitizing dye that has lost electrons receives electrons from ions of the electrolyte layer 6, and the molecules that has supplied the electrons receive electrons again at the surface of the counter electrode 4. This sequential reaction generates an electromotive force between the transparent conductive substrate 1 electrically connected to the dye-carrying porous titanium oxide layers 2a to 2d and the transparent conductive substrate 3. In such a manner, photoelectric conversion is performed.

[Method for controlling color produced on dye-sensitized solar cell]

Next, a method for controlling the color produced on the dye-sensitized solar cell using the dye-carrying porous titanium oxide layers 2a to 2d will be specifically described.

1. Control of color based on scattering particle content

A paste composed of titanium oxide fine particles having a particle size of 20 nm is applied such that a single layer (thickness: 3 μm) is formed. A mixture obtained by kneading 10 to 100 wt% of a paste composed of titanium oxide fine particles having a particle size of 400 nm with the paste of titanium oxide fine particles having a particle size of 20 nm is then applied on the layer such that another single layer (thickness: 5 μm or 6 μm) is formed. After that, firing is performed to solidify the pastes. In this case, the titanium oxide fine particles having a particle size of 400 nm constituting the second layer are scattering particles of light, and the color is changed in accordance with the content of the titanium oxide fine particles having a particle size of 400 nm.

D131, D149, N719, a black dye, and a mixed dye (D131 + a black dye) were used as a sensitizing dye carried on the titanium oxide fine particles. Herein, the formal name of D131 is 2-Cyano-3-[4-[4-(2,2-diphenylethenyl) phenyl]- 1,2,3,3a, 4,8b- hexahydrocyclopent [b]indol-7-yl]-2-propenoic acid. Furthermore, the formal name of D149 is 5-[[4-[4-(2,2-diphenylethenyl)phenyl]-1,2,3,3a,4,8b-hexahydrocyclopent[b]indol-7-yl]methylene]-2-(3-ethyl-4-oxo-2-thioxo-5-thiazolidinylidene)-4-oxo-3-Thiazolidineacetic acid. In addition, N719 is a cis-bis (isothiocyanate)-bis (2,2'- bipyridyl- 4,4'- dicarboxylic acid) ruthenium(II) bis(tetrabutylammonium) complex, which is a type of bipyridine complex. Furthermore, a black dye is a tris(isothiocyanate)(2,2':6',2"-terpyridyl-4,4',4"-tricarboxylic acid) ruthenium(II) tris(tetrabutylammonium) complex, which is a type of terpyridine complex.

Figs. 6 to 10 each show a change in RGB color coordinate (y) as a function of scattering particle content (x) when each of the sensitizing dyes is used. In Figs. 6 to 10, the unit of scattering particle content on the horizontal axis is [content %/10].

Fig. 6 shows a change in RGB color coordinate (y) as a function of scattering particle content (x) when D131 is used as the sensitizing dye. In Fig. 6, R is represented by $y = -0.16x^2 + 2.12x + 229$, G is represented by $y = -6.31n(x) + 175$, and B is represented by $y = -11.11n(x) + 51$.

Fig. 7 shows a change in RGB color coordinate (y) as a function of scattering particle content (x) when D149 is used as the sensitizing dye. In Fig. 7, R is represented by $y = 0.43x^2 - 7.9x + 78$, G is represented by $y = 0.13x^2 - 2.3x + 18$, and B is represented by $y = 0.27x^2 - 4.9x + 54$.

Fig. 8 shows a change in RGB color coordinate (y) as a function of scattering particle content (x) when N719 is used as the sensitizing dye. In Fig. 8, R is represented by $y = -15.51n(x) + 150$, G is represented by $y = -9.51n(x) + 51$, and B is represented by $y = -5.21n(x) + 39$.

Fig. 9 shows a change in RGB color coordinate (y) as a function of scattering particle content (x) when a black dye is used as the sensitizing dye. In Fig. 9, R is represented by $y = -14.21n(x) + 101$, G is represented by $y = -16.91n(x) + 119$, and B is represented by $y = -10.81n(x) + 61$.

Fig. 10 shows a change in RGB color coordinate (y) as a function of scattering particle content (x) when a mixed dye (D131 + a black dye) is used as the sensitizing dye. In Fig. 10, R is represented by $y = -16.31n(x) + 132$, G is represented by $y = -11.51n(x) + 89$, and B is represented by $y = -0.73x + 37$.

2. Control of color based on number of stacked scattering layer

A paste composed of titanium oxide fine particles having a particle size of 20 nm is applied such that a single layer (thickness: 3 μm) is formed. A mixture obtained by kneading 20 wt% of a paste composed of titanium oxide fine particles having a particle size of 400 nm with the paste of titanium oxide fine particles having a particle size of 20 nm is then applied on the layer such that one to three layers are formed. After that, firing is performed to solidify the pastes. In this case, the second layers composed of the mixed paste and containing the titanium oxide fine particles having a particle size of 400 nm as scattering particles of light are scattering layers, and the color is changed in accordance with the number of stacked layers of the mixed paste.

D131, D149, N719, a black dye, and a mixed dye (D131 + a black dye) were used as a sensitizing dye carried on the titanium oxide fine particles.

Figs. 11 to 15 each show a change in RGB color coordinate (y) as a function of number of stacked layers of the mixed paste (x) when each of the sensitizing dyes is used. The mixed paste is obtained by kneading 20 wt% of a paste composed of titanium oxide fine particles having a particle size of about 400 nm with a paste composed of titanium oxide fine particles having a particle size of about 20 nm.

Fig. 11 shows a change in RGB color coordinate (y) as a function of number of stacked layers of the mixed paste (x) when D131 is used as the sensitizing dye. In Fig. 11, R is represented by y = 2x + 231, G is represented by y = -13x + 175, and B is represented by y = -5.5x + 37.

Fig. 12 shows a change in RGB color coordinate (y) as a function of number of stacked layers of the mixed paste (x) when D149 is used as the sensitizing dye. In Fig. 12, R is represented by y = -301n(x) + 47, G is represented by y = - 6.81n(x) + 10, and B is represented by y = -251n(x) + 38.

Fig. 13 shows a change in RGB color coordinate (y) as a function of number of stacked layers of the mixed paste (x) when N719 is used as the sensitizing dye. In Fig. 13, R is represented by y = -37.5x + 169, G is represented by y = - 18x + 62, and B is represented by y = -15x + 57.

Fig. 14 shows a change in RGB color coordinate (y) as a function of number of stacked layers of the mixed paste (x) when a black dye is used as the sensitizing dye. In Fig. 14, R is represented by y = 501n(x) + 80, G is represented by y = -331n(x) + 93, and B is represented by y = -8x + 52.

Fig. 15 shows a change in RGB color coordinate (y) as a function of number of stacked layers of the mixed paste (x) when a mixed dye (D131 + a black dye) is used as the sensitizing dye. In Fig. 15, R is represented by y = -22x + 127, G is represented by y = -17.5x + 88, and B is represented by y = -211n(x) + 38.

3. Control of color based on number of stacked transparent layers

After a paste composed of titanium oxide fine particles having a particle size of 20 nm is applied such that one or two layers are formed, firing is performed to solidify the paste. In this case, a transparent layer is formed of the paste composed of titanium oxide fine particles having a particle size of 20 nm, and the color is changed in accordance with the number of the stacked transparent layers.

D131, D149, N719, a black dye, and a mixed dye (D131 + a black dye) were used as a sensitizing dye carried on the titanium oxide fine particles.

Figs. 16 to 20 each show a change in RGB color coordinate (y) as a function of number of stacked layers of the paste (x) when each of the sensitizing dyes is used. The number of stacked layers of the paste composed of titanium oxide fine particles having a particle size of about 20 nm is one or two.

Fig. 16 shows a change in RGB color coordinate (y) as a function of number of stacked layers of the paste (x) when D131 is used as the sensitizing dye. In Fig. 16, R is represented by y = -x + 234, G is represented by y = -14x + 213, and B is represented by y = -7x + 68.

Fig. 17 shows a change in RGB color coordinate (y) as a function of number of stacked layers of the paste (x) when D149 is used as the sensitizing dye. In Fig. 17, R is represented by y = -6x + 88, G is represented by y = -3x + 58, and B is represented by y = -x + 21.

Fig. 18 shows a change in RGB color coordinate (y) as a function of number of stacked layers of the paste (x) when N719 is used as the sensitizing dye. In Fig. 18, R is represented by y = -35x + 228, G is represented by y = -42x + 139, and B is represented by y = -29x + 95.

Fig. 19 shows a change in RGB color coordinate (y) as a function of number of stacked layers of the paste (x) when a black dye is used. In Fig. 19, R is represented by y = -49x + 222, G is represented by y = -44x + 236, and B is represented by y = -34x + 147.

Fig. 20 shows a change in RGB color coordinate (y) as a function of number of stacked layers of the paste (x) when a mixed dye (D131 + a black dye) is used as the sensitizing dye. In Fig. 20, R is represented by y = 163, G is represented by y = -23x + 143, and B is represented by y = - 10x + 57.

By combining the control of color based on a scattering particle content, the control of color based on the number of stacked scattering layers, the control of color based on the number of stacked transparent layers, and the selection of sensitizing dyes, various colors can be displayed on a light-receiving surface using the dye-carrying porous titanium oxide layers 2a to 2d. Specifically, twelve colors can be displayed with each of the above-described five sensitizing dyes as shown in Tables 1 to 5, that is, 60 colors in total can be displayed with the five sensitizing dyes. Tables 1 to 5 show RGB color coordinates of each of the colors. Herein, Table 1 shows RGB color coordinates when D131 is used. Table 2 shows RGB color coordinates when D149 is used. Table 3 shows RGB color coordinates when N719 is used. Table 4 shows RGB color coordinates when a black dye is used. Table 5 shows RGB color coordinates when a mixed dye (D131 + a black dye) is used. It is clear from Tables 1 to 4 that as many as twelve colors can be displayed despite the fact that only one type of sensitizing dye is used.

Table 1

| Sensitizing dye: D131 | | | |
|---|---|---|---|
| Color | R | G | B |
| 1 | 233 | 199 | 61 |
| 2 | 232 | 185 | 54 |
| 3 | 230 | 181 | 62 |
| 4 | 235 | 164 | 32 |
| 5 | 235 | 164 | 32 |
| 6 | 235 | 164 | 32 |
| 7 | 235 | 164 | 32 |
| 8 | 230 | 146 | 25 |
| 9 | 239 | 138 | 21 |
| 10 | 230 | 163 | 55 |
| 11 | 243 | 225 | 115 |
| 12 | 243 | 225 | 115 |

Table 2

| Sensitizing dye: D149 | | | |
|---|---|---|---|
| Color | R | G | B |
| 13 | 82 | 20 | 55 |
| 14 | 76 | 19 | 52 |
| 15 | 67 | 15 | 47 |
| 16 | 67 | 15 | 47 |
| 17 | 43 | 8 | 32 |
| 18 | 43 | 8 | 32 |
| 19 | 50 | 11 | 40 |
| 20 | 19 | 4 | 14 |
| 21 | 19 | 4 | 14 |
| 22 | 52 | 23 | 44 |
| 23 | 171 | 135 | 158 |
| 24 | 160 | 110 | 137 |

Table 3

| Sensitizing dye: N719 | | | |
|---|---|---|---|
| Color | R | G | B |
| 25 | 193 | 97 | 66 |
| 26 | 158 | 55 | 37 |
| 27 | 158 | 55 | 37 |
| 28 | 122 | 34 | 29 |
| 29 | 122 | 34 | 29 |
| 30 | 122 | 34 | 29 |
| 31 | 137 | 46 | 44 |
| 32 | 84 | 23 | 24 |
| 33 | 62 | 10 | 14 |
| 34 | 137 | 53 | 53 |
| 35 | 229 | 199 | 182 |
| 36 | 213 | 182 | 182 |

Table 4

| Sensitizing dye: Black dye | | | |
|---|---|---|---|
| Color | R | G | B |
| 37 | 173 | 192 | 113 |
| 38 | 124 | 148 | 79 |
| 39 | 113 | 134 | 70 |
| 40 | 74 | 90 | 42 |
| 41 | 77 | 90 | 42 |
| 42 | 77 | 90 | 42 |
| 43 | 83 | 94 | 45 |
| 44 | 38 | 67 | 34 |
| 45 | 30 | 58 | 29 |
| 46 | 100 | 110 | 47 |
| 47 | 223 | 223 | 190 |
| 48 | 205 | 208 | 173 |

Table 5

| Sensitizing dye: D131 + Black dye | | | |
|---|---|---|---|
| Color | R | G | B |
| 49 | 163 | 120 | 47 |
| 50 | 163 | 97 | 37 |
| 51 | 144 | 97 | 37 |
| 52 | 111 | 76 | 33 |

(continued)

| Color | R | G | B |
|---|---|---|---|
| 53 | 102 | 68 | 31 |
| 54 | 102 | 68 | 31 |
| 55 | 106 | 72 | 38 |
| 56 | 80 | 50 | 22 |
| 57 | 62 | 37 | 15 |
| 58 | 111 | 80 | 39 |
| 59 | 220 | 208 | 141 |
| 60 | 200 | 190 | 134 |

The structures of the dye-carrying porous titanium oxide layers that produce the above-described colors 1 to 60 are as follows.

(1) Colors 1, 13, 25, 37, and 49

The structure includes a porous titanium oxide layer having a thickness of 3 μm and composed of titanium oxide fine particles with a particle size of 20 nm.

(2) Colors 2, 14, 26, 38, and 50

The structure includes a porous titanium oxide layer having a thickness of 5 μm and composed of titanium oxide fine particles with a particle size of 20 nm.

(3) Colors 3, 15, 27, 39, and 51

The structure includes a first porous titanium oxide layer having a thickness of 3 μm and composed of titanium oxide fine particles with a particle size of 20 nm and a second porous titanium oxide layer having a thickness of 5 μm and composed of titanium oxide fine particles with a particle size of 20 nm and 10 wt% of titanium oxide fine particles with a particle size of 400 nm, the second porous titanium oxide layer being formed on the first porous titanium oxide layer.

(4) Colors 4, 16, 28, 40, and 52

The structure includes a first porous titanium oxide layer having a thickness of 3 μm and composed of titanium oxide fine particles with a particle size of 20 nm and a second porous titanium oxide layer having a thickness of 6 μm and composed of titanium oxide fine particles with a particle size of 20 nm and 30 wt% of titanium oxide fine particles with a particle size of 400 nm, the second porous titanium oxide layer being formed on the first porous titanium oxide layer.

(5) Colors 5, 17, 29, 41, and 53

The structure includes a first porous titanium oxide layer having a thickness of 3 μm and composed of titanium oxide fine particles with a particle size of 20 nm and a second porous titanium oxide layer having a thickness of 6 μm and composed of titanium oxide fine particles with a particle size of 20 nm and 50 wt% of titanium oxide fine particles with a particle size of 400 nm, the second porous titanium oxide layer being formed on the first porous titanium oxide layer.

(6) Colors 6, 18, 30, 42, and 54

The structure includes a first porous titanium oxide layer having a thickness of 3 μm and composed of titanium oxide fine particles with a particle size of 20 nm and a second porous titanium oxide layer having a thickness of 5 μm and composed of titanium oxide fine particles with a particle size of 400 nm, the second porous titanium oxide layer being formed on the first porous titanium oxide layer.

(7) Colors 7, 19, 31, 43, and 55

The structure includes a first porous titanium oxide layer having a thickness of 3 μm and composed of titanium oxide fine particles with a particle size of 20 nm and a second porous titanium oxide layer having a thickness of 7 μm and composed of titanium oxide fine particles with a particle size of 20 nm and 20 wt% of titanium oxide fine particles with a particle size of 400 nm, the second porous titanium oxide layer being formed on the first porous titanium oxide layer.

(8) Colors 8, 20, 32, 44, and 56

The structure includes a first porous titanium oxide layer having a thickness of 3 μm and composed of titanium oxide fine particles with a particle size of 20 nm and a second porous titanium oxide layer having a thickness of 13μ m and composed of titanium oxide fine particles with a particle size of 20 nm and 20 wt% of titanium oxide fine particles with a particle size of 400 nm, the second porous titanium oxide layer being formed on the first porous titanium oxide layer.

(9) Colors 9, 21, 33, 45, and 57

The structure includes a first porous titanium oxide layer having a thickness of 3 μm and composed of titanium oxide fine particles with a particle size of 20 nm and a second porous titanium oxide layer having a thickness of 17 μm and composed of titanium oxide fine particles with a particle size of 20 nm and 20 wt% of titanium oxide fine particles with a particle size of 400 nm, the second porous titanium oxide layer being formed on the first porous titanium oxide layer.

(10) Colors 10, 22, 34, 46, and 58

The structure includes a first porous titanium oxide layer having a thickness of 3 μm and composed of titanium oxide fine particles with a particle size of 20 nm and a second porous titanium oxide layer having a thickness of 3 μm and composed of titanium oxide fine particles with a particle size of about 400 nm, the second porous titanium oxide layer being formed on the first porous titanium oxide layer.

(11) Colors 11, 23, 35, 47, and 59

The structure includes a porous titanium oxide layer having a thickness of 3 μm and composed of titanium oxide fine particles with a particle size of 400 nm.

(12) Colors 12, 24, 36, 48, and 60

The structure includes a porous titanium oxide layer having a thickness of 5 μm and composed of titanium oxide fine particles with a particle size of 400 nm.

The above-described 60 colors are colors when the dye-sensitized solar cell is viewed from the light-receiving surface side. However, colors when the dye-sensitized solar cell is viewed from the side of a surface (a surface exposed outside the transparent substrate 3a) opposite the light-receiving surface of the dye-sensitized solar cell can be displayed differently. Specifically, in the case of (10) that uses a porous titanium oxide layer composed of titanium oxide fine particles having a particle size of 400 nm as a dye-carrying porous titanium oxide layer, the titanium oxide fine particles being scattering particles, colors that are different from the colors 10, 22, 34, 46, and 58 can be displayed. Furthermore, in the case of (11), colors that are different from the colors 11, 23, 35, 47, and 59 can be displayed. Moreover, in the case of (11), colors that are different from the colors 12, 24, 36, 48, and 60 can be displayed.

<Example 1>

An FTO substrate for amorphous solar cells (sheet resistance 10 Ω/sq) available from Nippon Sheet Glass Co., Ltd., the FTO substrate being obtained by forming an FTO film on a glass substrate having a thickness of 4 mm, was processed into a square shape with a size of 206 mm × 206 mm. Ultrasonic cleaning was performed on the FTO substrate using acetone, an alcohol, an alkaline cleaning liquid, and ultrapure water in that order, and the FTO substrate was sufficiently dried. The FTO substrate was used as the transparent conductive substrates 1 and 3.

The FTO film was removed from a region with widths of a = b = 1.5 mm and along two sides, of the FTO substrate as the transparent conductive substrate 1, that are orthogonal to each other by laser beam irradiation (laser etching) to expose the glass substrate in that region.

Subsequently, with a screen printer, a paste obtained by dispersing titanium oxide fine particles having an appropriate particle size was applied to the FTO film of the' FTO substrate an appropriate number of times at an appropriate thickness in accordance with the color displayed using the dye-carrying porous titanium oxide layers 2a to 2d to be formed, using a screen having a desired pattern that corresponds to the pattern of the dye-carrying porous titanium oxide layers 2a to 2d.

Next, the FTO substrate to which the paste was applied by screen printing in a desired pattern as described above was fired using an electric furnace at 510°C for 30 minutes, whereby the titanium oxide fine particles were sintered and a titanium oxide fine particles-sintered body was formed.

Subsequently, to remove the impurities of the thus-formed titanium oxide fine particles-sintered body and to improve the activity, ultraviolet ray exposure was performed using an excimer lamp for three minutes.

Next, by immersing the titanium oxide fine particles-sintered body in a sensitizing dye solution at room temperature, the titanium oxide fine particles-sintered body was caused to carry a sensitizing dye. After that, the titanium oxide fine particles-sintered body was cleaned with acetonitrile and dried in a dark place. A mixed solvent of tert-butyl alcohol/acetonitrile (1:1 by volume) was used as a solvent of the sensitizing dye solution. When D149 was used as the sensitizing dye, the titanium oxide fine particles-sintered body was immersed for three hours in 0.5 mM sensitizing dye solution to which 1.0 mM cdCA was added. When a black dye was used as the sensitizing dye, the titanium oxide fine particles-sintered body was immersed for 72 hours in 0.2 mM sensitizing dye solution. When N719 was used as the sensitizing dye, the titanium oxide fine particles-sintered body was immersed for 48 hours in 0.5 mM sensitizing dye solution. When a mixed dye (D131 + black dye) was used as the sensitizing dye, the titanium oxide fine particles-sintered body was immersed for 96 hours in a sensitizing dye solution composed of 0.1875 mM D131 and 0.5625 mM black dye. Thus, the dye-carrying porous titanium oxide layers 2a to 2d were formed.

On the other hand, a filling hole with a diameter of 0.5 mm was formed on one of the corners of the FTO substrate as the transparent conductive substrate 3. Next, 30 mL of ethanol solution of chloroplatinic acid ($H_2PtCl_6$:EtOH, 0.1 wt%) was sprayed on the FTO film of the FTO substrate. Firing was then performed in an electric furnace at 450°C for 30 minutes to sinter platinum fine particles. Thus, a platinum fine particle layer was formed as the counter electrode 4. Subsequently, the platinum fine particle layer and the FTO film were removed from a region with widths of a = b = 1.5 mm and along two sides, of the FTO substrate, that are orthogonal to each other by laser beam irradiation (laser etching) to expose the glass substrate in that region.

Next, an ultraviolet (UV) curable adhesive as the sealant 5 was applied to the counter electrode (platinum fine particle layer) on the FRO substrate at a thickness of 50 μm by screen printing such that a current collecting portion with a width of 1.5 mm and outer dimensions of 203 mm × 203 mm was left. The FTO substrate on which dye-carrying porous titanium oxide layers 2a to 2d were formed was bonded to the FTO substrate on which the counter electrode was formed, through the UV curable adhesive. Herein, these FTO substrates were bonded to each other so as to be displaced from each other by 1.5 mm in the x and y axis directions. After that, the UV curable adhesive was irradiated with ultraviolet rays and thus cured.

On the other hand, 0.05 M sodium iodide (NaI), 0.7 M 1-propyl-2.3-dimethylimidazolium iodide (DMPImI), 0.1 M iodine ($I_2$), and 0.1 M tert-butylpyridine were dissolved in methoxypropionitrile as a solvent to prepare an electrolyte composition.

Next, the electrolyte composition was injected under a reduced pressure from the filling hole formed on one of the corners of the FTO substrate on which the counter electrode was formed, and the FTO substrates were placed in a 0.4 MPa pressurized vessel filled with nitrogen ($N_2$). Thus, the electrolyte composition was completely injected into the space surrounded by the above-described two FTO substrates and the sealant. Subsequently, the filling hole was sealed with a UV curable adhesive and a glass substrate to obtain a dye-sensitized solar cell.

As described above, according to the first embodiment, the following advantages can be achieved in addition to high photoelectric conversion efficiency and low manufacturing cost that have been achieved by publicly known dye-sensitized solar cells. That is to say, when the dye-sensitized solar cell is viewed from the light-receiving surface side or from the side of a surface opposite the light-receiving surface, the pattern of the dye-carrying porous titanium oxide layers 2a to 2d and the color design obtained from colors produced using the dye-carrying porous platinum fine particle layers 2a to 2d can be observed. Therefore, by selecting the color and pattern of the color design, there can be provided a dye-sensitized solar cell with excellent design properties that allow observers to feel comfortable when installed in a public place.

<2. Second embodiment>

[Structure of dye-sensitized solar cell]

In a dye-sensitized solar cell according to a second embodiment, the electrolyte layer 6 described in the dye-sensitized solar cell according to the first embodiment is composed of an electrolyte composition that includes iodine and a compound having at least one isocyanate group (-NCO). Preferably, the compound has at least one nitrogen-containing functional group in the molecule thereof in addition to the isocyanate group, or the electrolyte composition further includes a compound having at least one nitrogen-containing functional group in addition to the compound having at least one isocyanate group. The compound having at least one isocyanate group (-NCO) is not particularly limited, and the compound is preferably compatibilized with a solvent of the electrolyte, a salt of the electrolyte, and other additives. The compound having at least one nitrogen-containing functional group is preferably an amine compound, but is not limited thereto. The amine compound is not particularly limited, and the compound is preferably compatibilized with a solvent of the electrolyte, a salt of the electrolyte, and other additives. By providing a nitrogen-containing functional group to the compound having at least one isocyanate group in such a manner, particularly an open-circuit voltage of the dye-sensitized solar cell is significantly increased. The above-described compounds can be used as the compound having at least one isocyanate group.

Except for the description above, the dye-sensitized solar cell according to the second embodiment is the same as that according to the first embodiment.

According to the second embodiment, the electrolyte layer 6 is composed of an electrolyte composition that includes a compound having at least one isocyanate group, which can increase both a short-circuit current and an open-circuit voltage. Thus, there is an advantage that a dye-sensitized solar cell with significantly high photoelectric conversion efficiency can be obtained, in addition to the same advantages as in the first embodiment.

<Example 2>

When the electrolyte composition was prepared in Example 1, in addition to 0.1 M sodium iodide (NaI), 1.4 M 1-propyl-2.3-dimethylimidazolium iodide, 0.15 M iodine ($I_2$), and 0.2 M 4-tert-butylpyridine, 0.2 M phenyl isocyanate was dissolved in methoxypropionitrile. Except for the description above, a dye-sensitized solar cell of Example 2 was obtained in the same manner as in Example 1.

<3. Third embodiment>

[Structure of dye-sensitized solar cell]

As shown in Fig. 21, in a dye-sensitized solar cell according to a third embodiment, a light-amount adjusting plate 11 is disposed on the light-receiving surface of the transparent conductive substrate 1 described in the dye-sensitized solar cell according to the first embodiment. Herein, the amount of light that enters the dye-carrying porous titanium oxide layers 2a to 2d can be adjusted with the light-amount adjusting plate 11. Publicly known various light-amount adjusting plates that can adjust light amount through the application of an electric field can be used as the light-amount adjusting plate 11. Specifically, the light-amount adjusting plate 11 can be obtained using, for example, an electrochromic material and liquid crystal that can control the transmission of light through the application of an electric field and a transparent isotropic piezoelectric crystal that causes Pockels effect. When an electric field is applied to the light-amount adjusting plate 11, a voltage is applied to both sides of the light-amount adjusting plate 11. The voltage may be supplied from an external power source, or a voltage provided from a single dye-sensitized solar cell or a dye-sensitized solar cell module may be used. The voltage required for an operation of the light-amount adjusting plate 11 is determined in accordance with, for example, a material used for adjusting light amount.

<Example 3>

The light-amount adjusting plate 11 that uses an electrochromic material was used. Fig. 22 shows a structure of the light-amount adjusting plate 11. As shown in Fig. 22, the light-amount adjusting plate 11 includes a transparent electrode 11a, a transparent ion-conductive electrolyte layer 11b a transparent counter electrode 11c, an electrochromic layer 11d, and a transparent electrode 11e in that order from the light-receiving surface side of the transparent conductive substrate 1. The transparent electrodes 11a and 11e can bye composed of the above-described transparent conductive material. The electrochromic layer 11d can be composed of, for example, amorphous or crystalline tungsten trioxide ($WO_3$). The ion-conductive electrolyte layer 11b is preferably composed of a colorless, transparent material having high transport number of ions (M+) and high electrical conductivity (e.g., $1 \times 10^{-4}$ Ω·cm or higher). The ion-conductive electrolyte layer 11b may be composed of a liquid electrolyte or a solid electrolyte. An example of the liquid electrolyte includes an electrolyte obtained by dissolving an alkali metal salt such as $LiClO_4$ in an aprotic solvent. Furthermore, examples of the solid electrolyte include a proton electrolyte such as $H_3PO_4(WO_3)_{12}{\cdot}29H_2O$, an electrolyte obtained by causing a porous dielectric such as $Ta_2O_5$ or $MgF_2$ to retain an electrolyte solution, and a polymer solid electrolyte obtained by dissolving an inorganic salt in a polymer such as polyethylene oxide.

A method for adjusting the amount of transmitted light using the light-amount adjusting plate 11 will now be described.

When the light-amount adjusting plate 11 is made transparent to increase the amount of transmitted light, a voltage is applied between the transparent electrode 11e and the transparent electrode 11a such that the transparent electrode 11e side has a higher potential. Herein, the electrochromic layer 11d is composed of colorless, transparent $WO_3$ and is thus transparent.

When the degree of transparency of the light-amount adjusting plate 11 is decreased to reduce the amount of transmitted light, a voltage is applied between the transparent electrode 11e and the transparent electrode 11a such that the transparent electrode 11e side has a lower potential. This voltage application generates an electric field in the direction from the transparent electrode 11a to the transparent electrode 11e. As a result of the application of the electric field, electrons ($e^-$) are injected to the electrochromic layer 11d composed of colorless, transparent $WO_3$ from the transparent electrode 11e, and ions ($M^+$) are injected to the electrochromic layer 11d from the ion-conductive electrolyte layer 11b through the counter electrode 11c. Consequently, $MxWO_3$ is produced on the basis of the reaction represented by the following formula, and thus the electrochromic layer 11d is made to turn blue:

$$WO_3 + xM^+ + xe^- = MxWO_3$$

where $M^+$ is, for example, $H^+$, $Li^+$, $Na^+$, or $K^+$.

The electrochromic layer 11d is made to turn blue, whereby the degree of transparency of the light-amount adjusting plate 11 is decreased and the amount of transmitted light is reduced. The state in which the electrochromic layer 11d is made to turn blue is maintained even if the application of the electric field is stopped (memory effect).

In this state, if the polarity of the voltage applied between the transparent electrode 11e and the transparent electrode 11a is reversed, $MxWO_3$ is oxidized. As a result, the colored electrochromic layer 11d is returned to being the electrochromic layer 11d composed of colorless, transparent $WO_3$. In this case, an oxidation-reduction reaction corresponding to the reaction represented by the above-described formula occurs on the counter electrode 11c. Since the coloring efficiency is increased when the counter electrode 11c is composed of an oxidation color former such as $Ni(OH)_2$, $Ir(OH)_2$, or Prussian blue (PB), the light-modulating properties can be improved.

According to the third embodiment, the degree of transparency of the light-amount adjusting plate 11 can be controlled through the application of an electric field. Thus, there is an advantage that the amount of light that enters the dye-sensitized solar cell can be adjusted, in addition to the same advantages as in the first embodiment. By adjusting the amount of incident light, the color tone produced using the dye-carrying porous titanium oxide layers 2a to 2d when the dye-sensitized solar cell is viewed from the light-receiving surface side can be changed. Furthermore, the direction and intensity of the electric field applied to the light-amount adjusting plate 11 are optionally changed with respect to time, whereby the degree of transparency of the light-amount adjusting plate 11 can be changed with respect to time. Thus, the color tone produced using the dye-carrying porous titanium oxide layers 2a to 2d when the dye-sensitized solar cell is viewed from the light-receiving surface side can be changed with respect to time. Furthermore, the color design obtained using the dye-carrying porous titanium oxide layers 2a to 2d when the dye-sensitized solar cell is viewed from the light-receiving surface side can be optionally made invisible. Moreover, when the electrochromic layer 11d is composed of $WO_3$, the state in which $MxWO_3$ is produced through the application of an electric field is maintained even if the application of the electric field is stopped. Therefore, the electric power required for adjusting light amount with the light-amount adjusting plate 11 can be reduced.

The embodiments and Examples of the present invention have been described specifically. However, the present invention is not limited to the above-described embodiments and Examples, and various modifications can be made on the basis of technical idea of the present invention.

For example, the numerical values, structures, configurations, shape, materials, raw materials, processes, and the like specified in the above-described embodiments and Examples are mere examples, and different numerical values, structures, configurations, shapes, materials, raw materials, processes, and the like may be used if necessary.

Reference Signs List

| | |
|---|---|
| 1 | transparent conductive substrate |
| 1a | transparent substrate |
| 1b | transparent conductive layer |
| 2a to 2d | dye-carrying porous titanium oxide layer |
| 3 | transparent conductive substrate |
| 3a | transparent substrate |
| 3b | transparent conductive layer |
| 4 | counter electrode |
| 5 | sealant |
| 6 | electrolyte layer |
| 7 | current collecting layer |
| 8 | filling hole |
| 11 | light-amount adjusting plate |
| 11a and 11e | transparent electrode |
| 11b | ion-conductive electrolyte layer |
| 11c | counter electrode |
| 11d | electrochromic layer |

## Claims

**1.** A dye-sensitized solar cell comprising:

a transparent conductive substrate;
a single or a plurality of porous titanium oxide layers that are formed on the transparent conductive substrate, are composed of titanium oxide fine particles, and carry a sensitizing dye;
a counter electrode formed so as to face the porous titanium oxide layers; and
an electrolyte layer formed between the porous titanium oxide layers and the counter electrode,
wherein the porous titanium oxide layers are formed such that a desired color is produced by selecting a type of the sensitizing dye, a thickness, a stacked structure, a particle size of the titanium oxide fine particles or, if the titanium oxide fine particles are composed of at least two types of titanium oxide fine particles having different particle sizes, a combination ratio of the at least two types of titanium oxide fine particles.

**2.** The dye-sensitized solar cell according to Claim 1, wherein the porous titanium oxide layers are formed such that a desired color is produced and a desired pattern is formed by selecting the type of the sensitizing dye, the thickness, the stacked structure, the particle size of the titanium oxide fine particles or, if the titanium oxide fine particles are composed of at least two types of titanium oxide fine particles having different particle sizes, the combination ratio of the at least two types of titanium oxide fine particles.

**3.** The dye-sensitized solar cell according to Claim 2, wherein the sensitizing dye is D131, D149, N719, a black dye, or a mixture of D131 and the black dye.

**4.** The dye-sensitized solar cell according to Claim 3, wherein the porous titanium oxide layers are each constituted by (1) a porous titanium oxide layer having a thickness of 3 μm and composed of titanium oxide fine particles with a particle size of 20 nm; (2) a porous titanium oxide layer having a thickness of 5 μm and composed of titanium oxide fine particles with a particle size of 20 nm; (3) a first porous titanium oxide layer having a thickness of 3 μm and composed of titanium oxide fine particles with a particle size of 20 nm and a second porous titanium oxide layer having a thickness of 5 μm and composed of titanium oxide fine particles with a particle size of 20 nm and 10 wt% of titanium oxide fine particles with a particle size of 400 nm, the second porous titanium oxide layer being formed on the first porous titanium oxide layer; (4) a first porous titanium oxide layer having a thickness of 3 μm and composed of titanium oxide fine particles with a particle size of 20 nm and a second porous titanium oxide layer having a thickness of 6 μm and composed of titanium oxide fine particles with a particle size of 20 nm and 30 wt% of titanium oxide fine particles with a particle size of 400 nm, the second porous titanium oxide layer being formed on the first porous titanium oxide layer; (5) a first porous titanium oxide layer having a thickness of 3 μm and composed of titanium oxide fine particles with a particle size of 20 nm and a second porous titanium oxide layer having a thickness of 6 μm and composed of titanium oxide fine particles with a particle size of 20 nm and 50 wt% of titanium oxide fine particles with a particle size of 400 nm,

the second porous titanium oxide layer being formed on the first porous titanium oxide layer; (6) a first porous titanium oxide layer having a thickness of 3 μm and composed of titanium oxide fine particles with a particle size of 20 nm and a second porous titanium oxide layer having a thickness of 5 μm and composed of titanium oxide fine particles with a particle size of 400 nm, the second porous titanium oxide layer being formed on the first porous titanium oxide layer; (7) a first porous titanium oxide layer having a thickness of 3 μm and composed of titanium oxide fine particles with a particle size of 20 nm and a second porous titanium oxide layer having a thickness of 7 μm and composed of titanium oxide fine particles with a particle size of 20 nm and 20 wt% of titanium oxide fine particles with a particle size of 400 nm, the second porous titanium oxide layer being formed on the first porous titanium oxide layer; (8) a first porous titanium oxide layer having a thickness of 3 μm and composed of titanium oxide fine particles with a particle size of 20 nm and a second porous titanium oxide layer having a thickness of 13 μm and composed of titanium oxide fine particles with a particle size of 20 nm and 20 wt% of titanium oxide fine particles with a particle size of 400 nm, the second porous titanium oxide layer being formed on the first porous titanium oxide layer; (9) a first porous titanium oxide layer having a thickness of 3 μm and composed of titanium oxide fine particles with a particle size of 20 nm and a second porous titanium oxide layer having a thickness of 17 μm and composed of titanium oxide fine particles with a particle size of 20 nm and 20 wt% of titanium oxide fine particles with a particle size of 400 nm the second porous titanium oxide layer being formed on the first porous titanium oxide layer; (10) a first porous titanium oxide layer having a thickness of 3 μm and composed of titanium oxide fine particles with a particle size of 20 nm and a second porous titanium oxide layer having a thickness of 3 μm and composed of titanium oxide fine particles with a particle size of about 400 nm, the second porous titanium oxide layer being formed on the first porous titanium oxide layer; (11) a porous titanium oxide layer having a thickness of 3 μm and composed of titanium oxide fine particles with a particle size of 400 nm; or (12) a porous titanium oxide layer having a thickness of 5 μm and composed of titanium oxide fine particles with a particle size of 400 nm.

5. The dye-sensitized solar cell according to Claim 1, wherein the counter electrode is formed on a transparent conductive substrate.

6. The dye-sensitized solar cell according to Claim 5, wherein the transparent conductive substrate on which the porous titanium oxide layers are formed and the transparent conductive substrate on which the counter electrode is formed are arranged so as to be displaced from each other, and a periphery of a region sandwiched between these transparent conductive substrates is sealed with a sealant.

7. The dye-sensitized solar cell according to Claim 6, wherein the transparent conductive substrate on which the porous titanium oxide layers are formed and the transparent conductive substrate on which the counter electrode is formed are each obtained by forming a transparent conductive layer on an insulating transparent substrate, and the transparent conductive layer is removed from a portion of a periphery of each of the transparent conductive substrates, the portion being sealed with the sealant.

8. A method for manufacturing a dye-sensitized solar cell comprising:

   a step of screen printing a paste in which titanium oxide fine particles are dispersed on a transparent conductive substrate once or multiple times in the same pattern or in different patterns;
   a step of forming a single or a plurality of porous titanium oxide layers by firing the paste;
   a step of causing the porous titanium oxide layers to carry a sensitizing dye;
   a step of forming a counter electrode that faces the porous titanium oxide layers; and
   a step of forming an electrolyte layer between the porous titanium oxide layers and the counter electrode,
   wherein the porous titanium oxide layers are formed such that a desired color is produced by selecting a type of the sensitizing dye, a thickness, a stacked structure, a particle size of the titanium oxide fine particles or, if the titanium oxide fine particles are composed of at least two types of titanium oxide fine particles having different particle sizes, a combination ratio of the at least two types of titanium oxide fine particles.

9. The method for manufacturing a dye-sensitized solar cell according to Claim 8, wherein the porous titanium oxide layers are formed such that a desired color is produced and a desired pattern is formed by selecting the type of sensitizing dye, the thickness, the stacked structure, the particle size of the titanium oxide fine particles or, if the titanium oxide fine particles are composed of at least two types of titanium oxide fine particles having different particle sizes, the combination ratio of the at least two types of titanium oxide fine particles.

10. The method for manufacturing a dye-sensitized solar cell according to Claim 9, wherein the sensitizing dye is D131, D149, N719, a black dye, or a mixture of D131 and the black dye.

**11.** The dye-sensitized solar cell according to Claim 10, wherein the porous titanium oxide layers are each constituted by (1) a porous titanium oxide layer having a thickness of 3 μm and composed of titanium oxide fine particles with a particle size of 20 nm; (2) a porous titanium oxide layer having a thickness of 5 μm and composed of titanium oxide fine particles with a particle size of 20 nm; (3) a first porous titanium oxide layer having a thickness of 3 μm and composed of titanium oxide fine particles with a particle size of 20 nm and a second porous titanium oxide layer having a thickness of 5 μm and composed of titanium oxide fine particles with a particle size of 20 nm and 10 wt% of titanium oxide fine particles with a particle size of 400 nm, the second porous titanium oxide layer being formed on the first porous titanium oxide layer; (4) a first porous titanium oxide layer having a thickness of 3 μm and composed of titanium oxide fine particles with a particle size of 20 nm and a second porous titanium oxide layer having a thickness of 6 μm and composed of titanium oxide fine particles with a particle size of 20 nm and 30 wt% of titanium oxide fine particles with a particle size of 400 nm, the second porous titanium oxide layer being formed on the first porous titanium oxide layer; (5) a first porous titanium oxide layer having a thickness of 3 μm and composed of titanium oxide fine particles with a particle size of 20 nm and a second porous titanium oxide layer having a thickness of 6 μm and composed of titanium oxide fine particles with a particle size of 20 nm and 50 wt% of titanium oxide fine particles with a particle size of 400 nm, the second porous titanium oxide layer being formed on the first porous titanium oxide layer; (6) a first porous titanium oxide layer having a thickness of 3 μm and composed of titanium oxide fine particles with a particle size of 20 nm and a second porous titanium oxide layer having a thickness of 5 μm and composed of titanium oxide fine particles with a particle size of 400 nm, the second porous titanium oxide layer being formed on the first porous titanium oxide layer; (7) a first porous titanium oxide layer having a thickness of 3 μm and composed of titanium oxide fine particles with a particle size of 20 nm and a second porous titanium oxide layer having a thickness of 7 μm and composed of titanium oxide fine particles with a particle size of 20 nm and 20 wt% of titanium oxide fine particles with a particle size of 400 nm, the second porous titanium oxide layer being formed on the first porous titanium oxide layer; (8) a first porous titanium oxide layer having a thickness of 3 μm and composed of titanium oxide fine particles with a particle size of 20 nm and a second porous titanium oxide layer having a thickness of 13 μm and composed of titanium oxide fine particles with a particle size of 20 nm and 20 wt% of titanium oxide fine particles with a particle size of 400 nm, the second porous titanium oxide layer being formed on the first porous titanium oxide layer; (9) a first porous titanium oxide layer having a thickness of 3 μm and composed of titanium oxide fine particles with a particle size of 20 nm and a second porous titanium oxide layer having a thickness of 17 μm and composed of titanium oxide fine particles with a particle size of 20 nm and 20 wt% of titanium oxide fine particles with a particle size of 400 nm, the second porous titanium oxide layer being formed on the first porous titanium oxide layer; (10) a first porous titanium oxide layer having a thickness of 3 μm and composed of titanium oxide fine particles with a particle size of 20 nm and a second porous titanium oxide layer having a thickness of 3 μm and composed of titanium oxide fine particles with a particle size of about 400 nm, the second porous titanium oxide layer being formed on the first porous titanium oxide layer; (11) a porous titanium oxide layer having a thickness of 3 μm and composed of titanium oxide fine particles with a particle size of 400 nm; or (12) a porous titanium oxide layer having a thickness of 5 μm and composed of titanium oxide fine particles with a particle size of 400 nm.

**12.** A dye-sensitized solar cell comprising:

a transparent conductive substrate;
a single or a plurality of porous semiconductor oxide layers that are formed on the transparent conductive substrate, are composed of semiconductor oxide fine particles, and carry a sensitizing dye;
a counter electrode formed so as to face the porous semiconductor oxide layers; and
an electrolyte layer formed between the porous semiconductor oxide layers and the counter electrode,
wherein the porous semiconductor oxide layers are formed such that a desired color is produced by selecting a type of the sensitizing dye, a thickness, a stacked structure, a particle size of the semiconductor oxide fine particles or, if the semiconductor oxide fine particles are composed of at least two types of semiconductor oxide fine particles having different particle sizes, a combination ratio of the at least two types of semiconductor oxide fine particles.

**13.** A method for manufacturing a dye-sensitized solar cell comprising:

a step of screen printing a paste in which semiconductor oxide fine particles are dispersed on a transparent conductive substrate once or multiple times in the same pattern or in different patterns;
a step of forming a single or a plurality of porous semiconductor oxide layers by firing the paste;

a step of causing the porous semiconductor oxide layers to carry a sensitizing dye;
a step of forming a counter electrode that faces the porous semiconductor oxide layers; and
a step of forming an electrolyte layer between the porous semiconductor oxide layers and the counter electrode,
wherein the porous semiconductor oxide layers are formed such that a desired color is produced by selecting a type of the sensitizing dye, a thickness, a stacked structure, a particle size of the semiconductor oxide fine particles or, if the semiconductor oxide fine particles are composed of at least two types of semiconductor oxide fine particles having different particle sizes, a combination ratio of the at least two types of semiconductor oxide fine particles.

FIG. 1

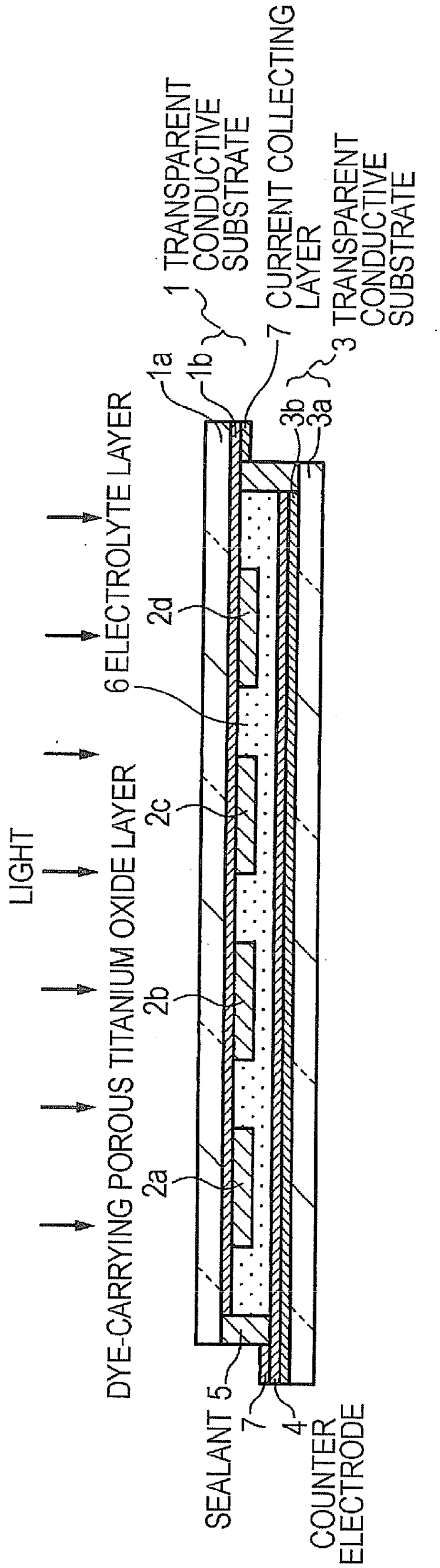
LIGHT
DYE-CARRYING POROUS TITANIUM OXIDE LAYER
6 ELECTROLYTE LAYER
2a
2b
2c
2d
1a
1b
1 TRANSPARENT CONDUCTIVE SUBSTRATE
7 CURRENT COLLECTING LAYER
3 TRANSPARENT CONDUCTIVE SUBSTRATE
3b
3a
SEALANT 5
7
4
COUNTER ELECTRODE

FIG. 2

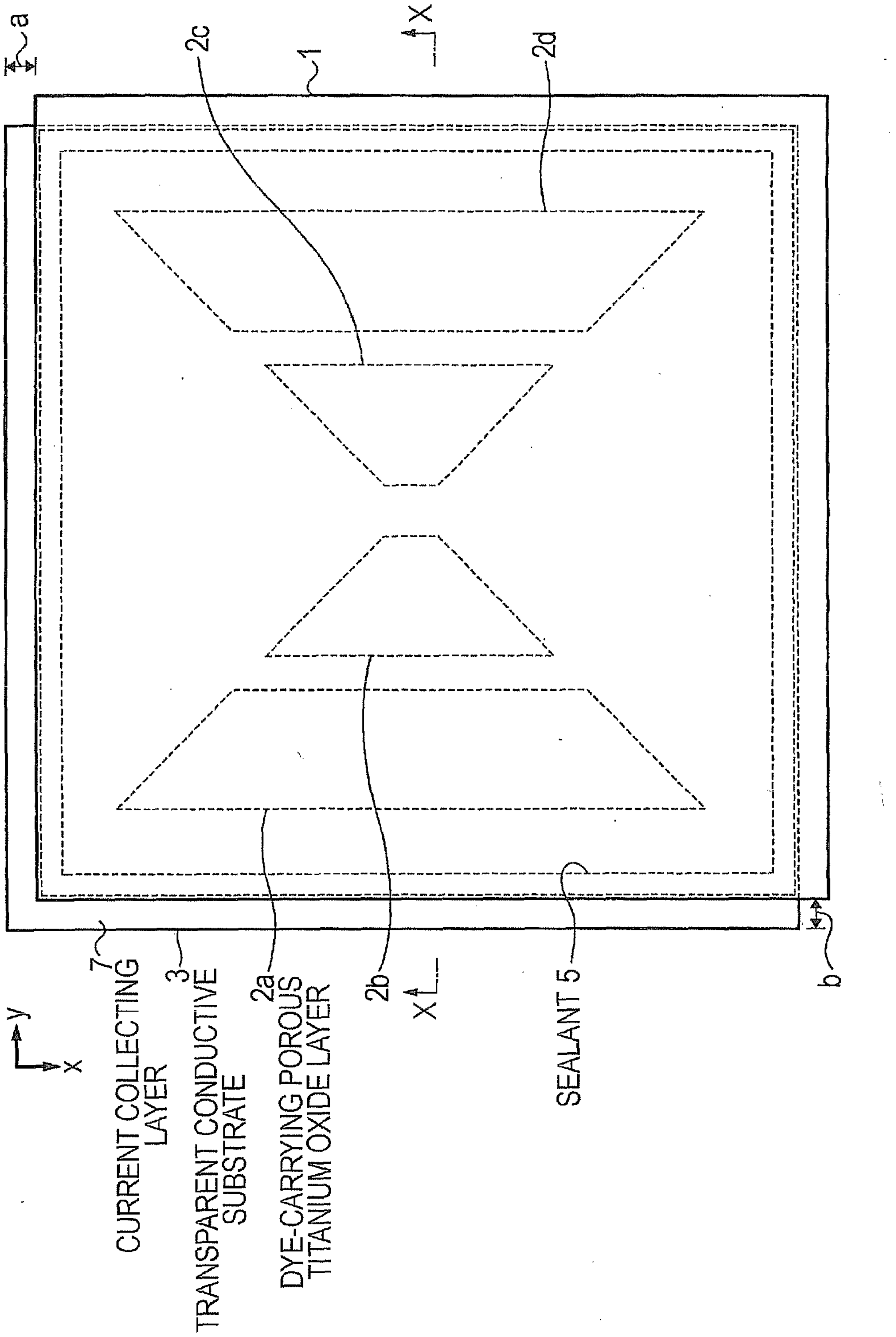
a
2c
X
1
2d
7
CURRENT COLLECTING LAYER
3
TRANSPARENT CONDUCTIVE SUBSTRATE
2a
DYE-CARRYING POROUS TITANIUM OXIDE LAYER
2b
X
SEALANT 5
b
y
x

FIG. 3

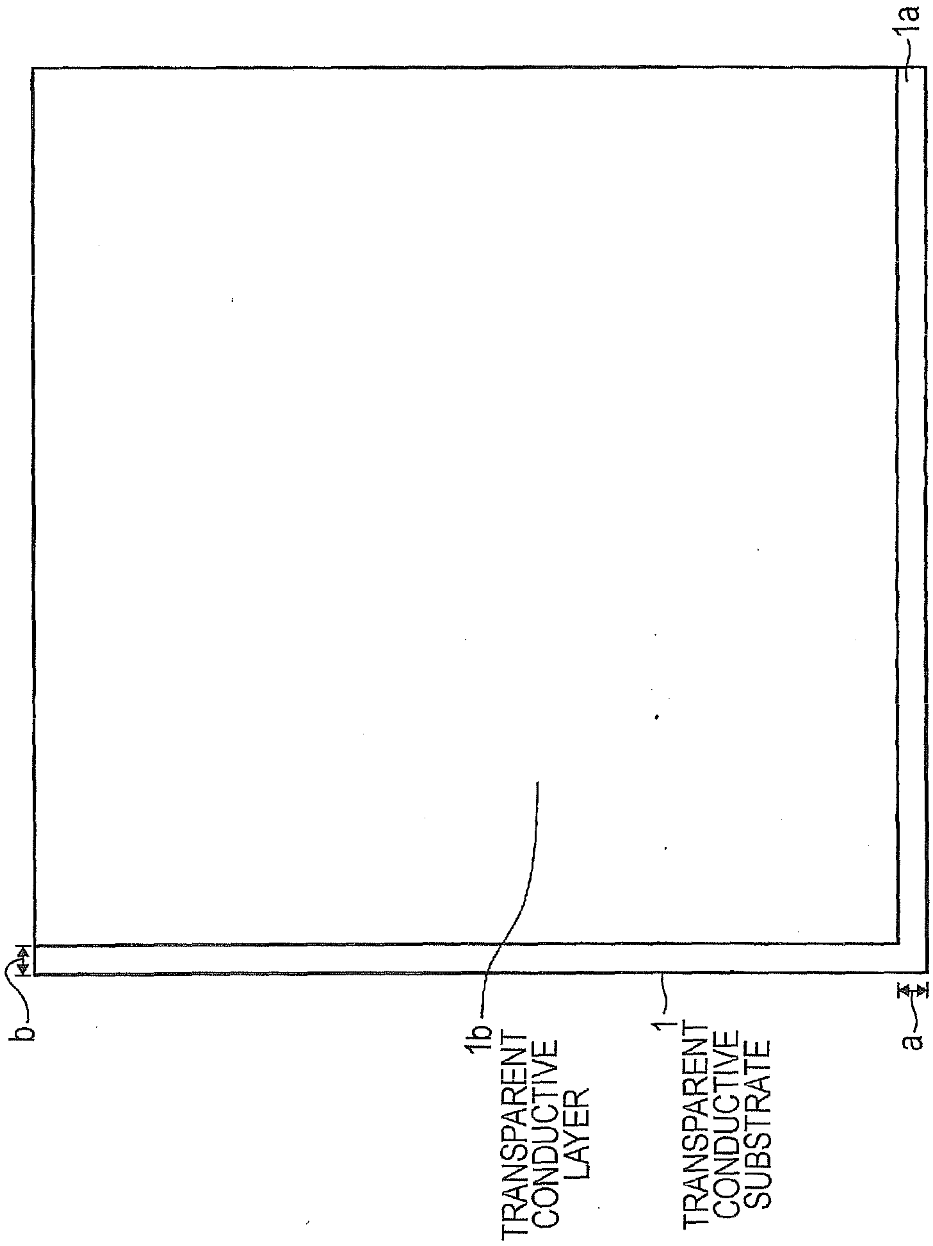
1a
b
1b
TRANSPARENT CONDUCTIVE LAYER
1
TRANSPARENT CONDUCTIVE SUBSTRATE
a

FIG. 4

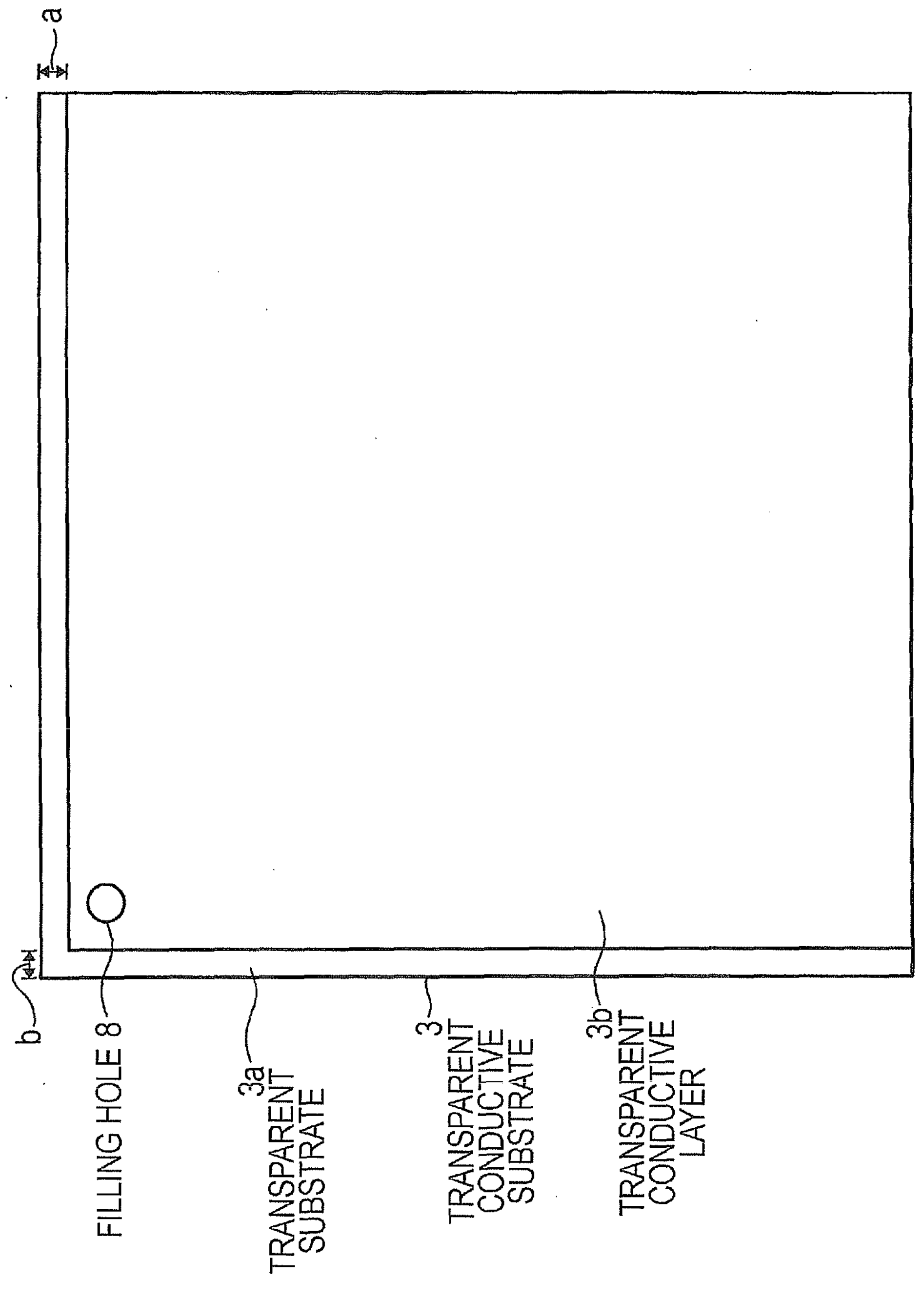
a
b
FILLING HOLE 8
3a
TRANSPARENT SUBSTRATE
3
TRANSPARENT CONDUCTIVE SUBSTRATE
3b
TRANSPARENT CONDUCTIVE LAYER

FIG. 5

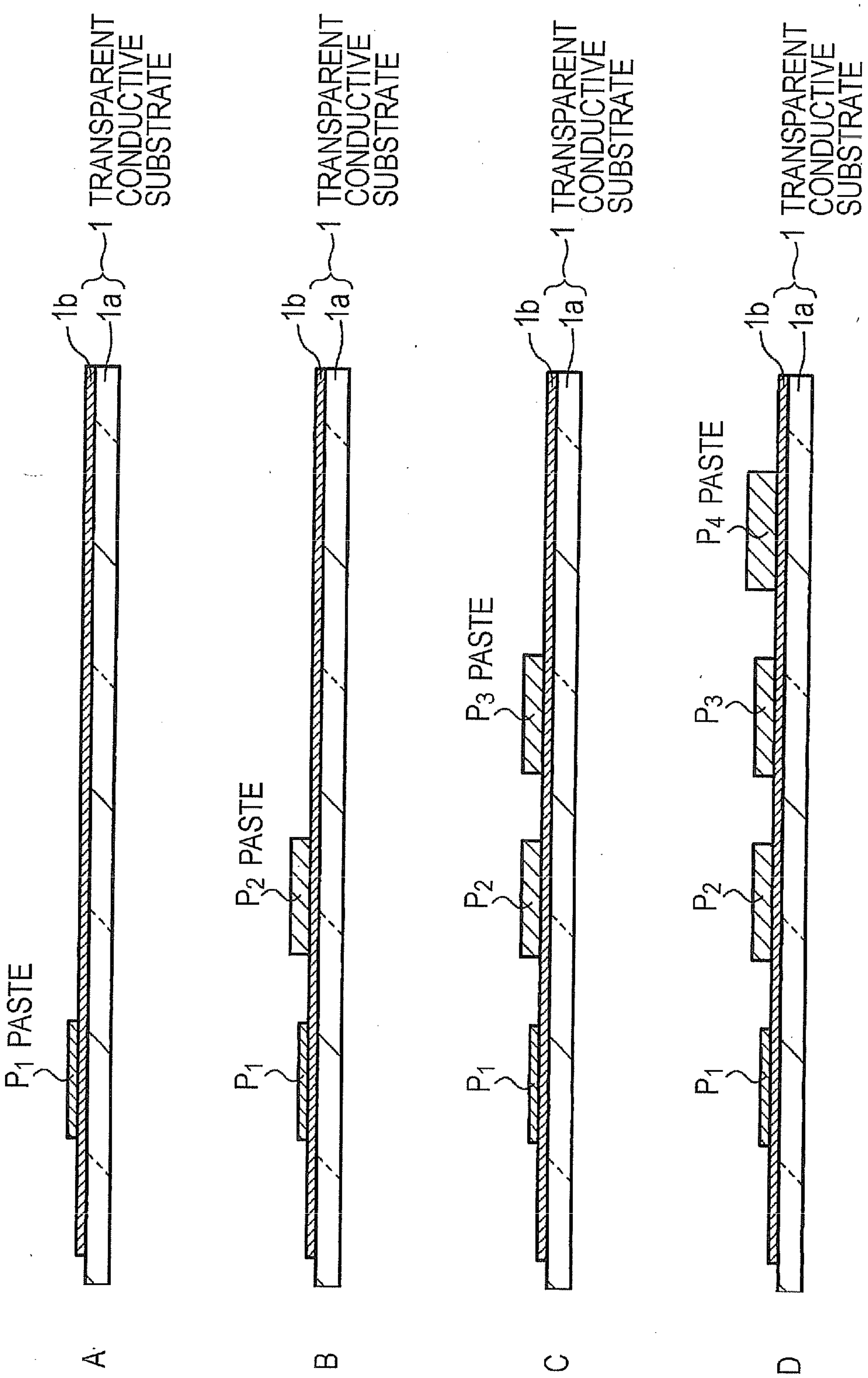
A
B
C
D
1 TRANSPARENT CONDUCTIVE SUBSTRATE
1a
1b
P1 PASTE
P1
P2 PASTE
P2
P3 PASTE
P3
P4 PASTE

FIG. 6

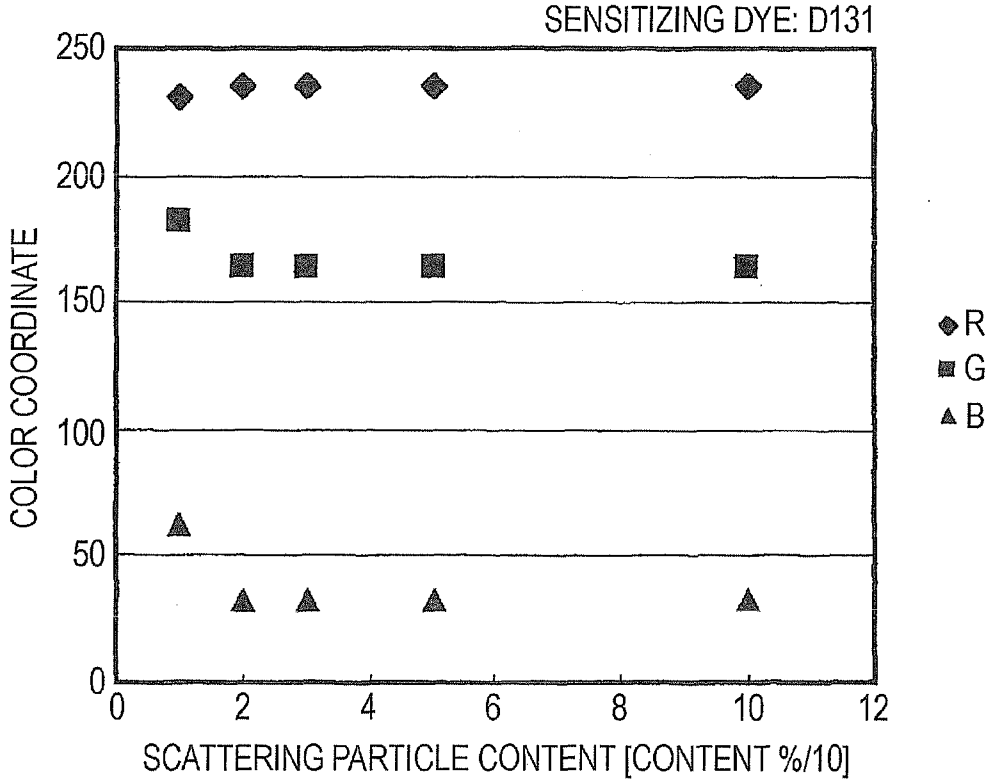
SENSITIZING DYE: D131
COLOR COORDINATE
250
200
150
100
50
0
0
2
4
6
8
10
12
SCATTERING PARTICLE CONTENT [CONTENT %/10]
R
G
B

FIG. 7

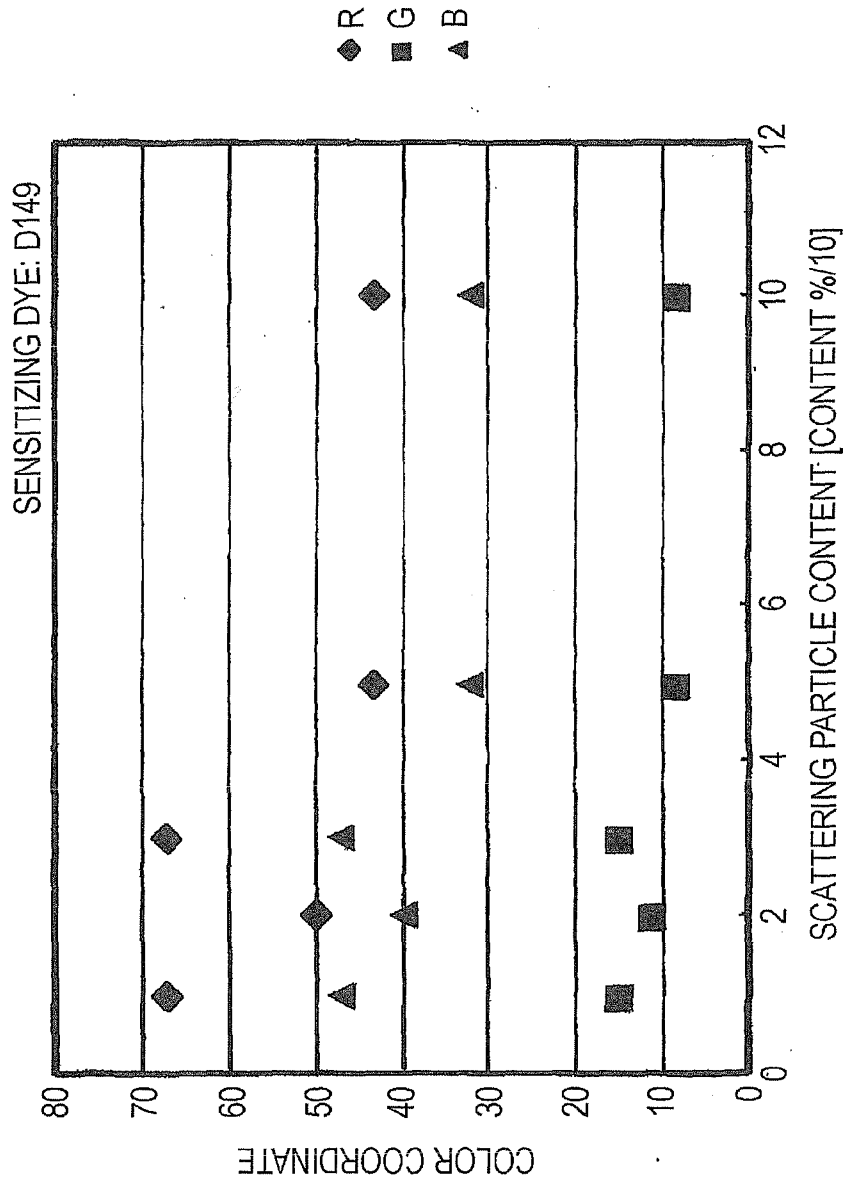
SENSITIZING DYE: D149
COLOR COORDINATE
0
10
20
30
40
50
60
70
80
SCATTERING PARTICLE CONTENT [CONTENT %/10]
0
2
4
6
8
10
12
R
G
B

FIG. 8

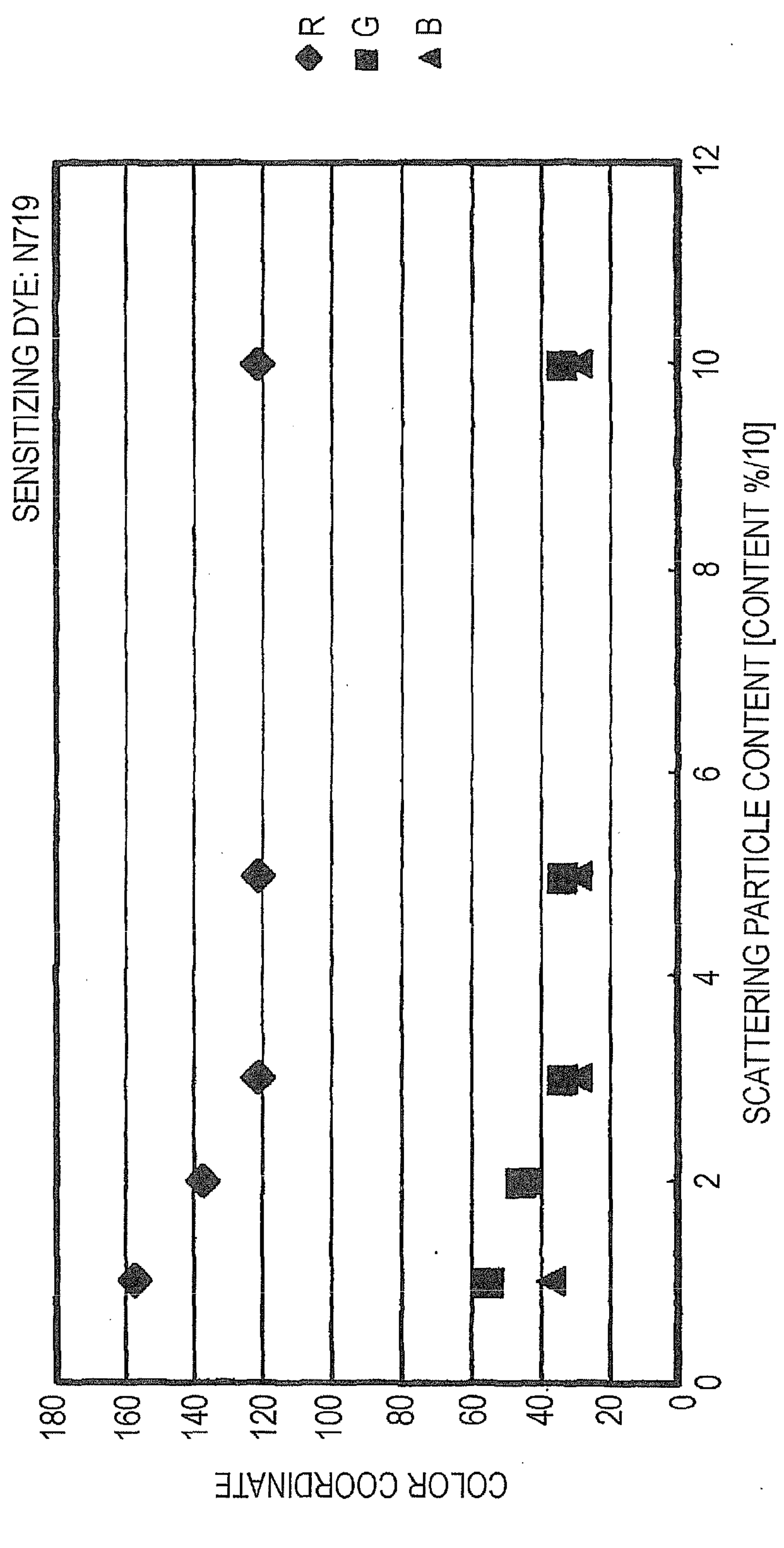
SENSITIZING DYE: N719
COLOR COORDINATE
SCATTERING PARTICLE CONTENT [CONTENT %/10]
R
G
B
0
20
40
60
80
100
120
140
160
180
0
2
4
6
8
10
12

FIG. 9

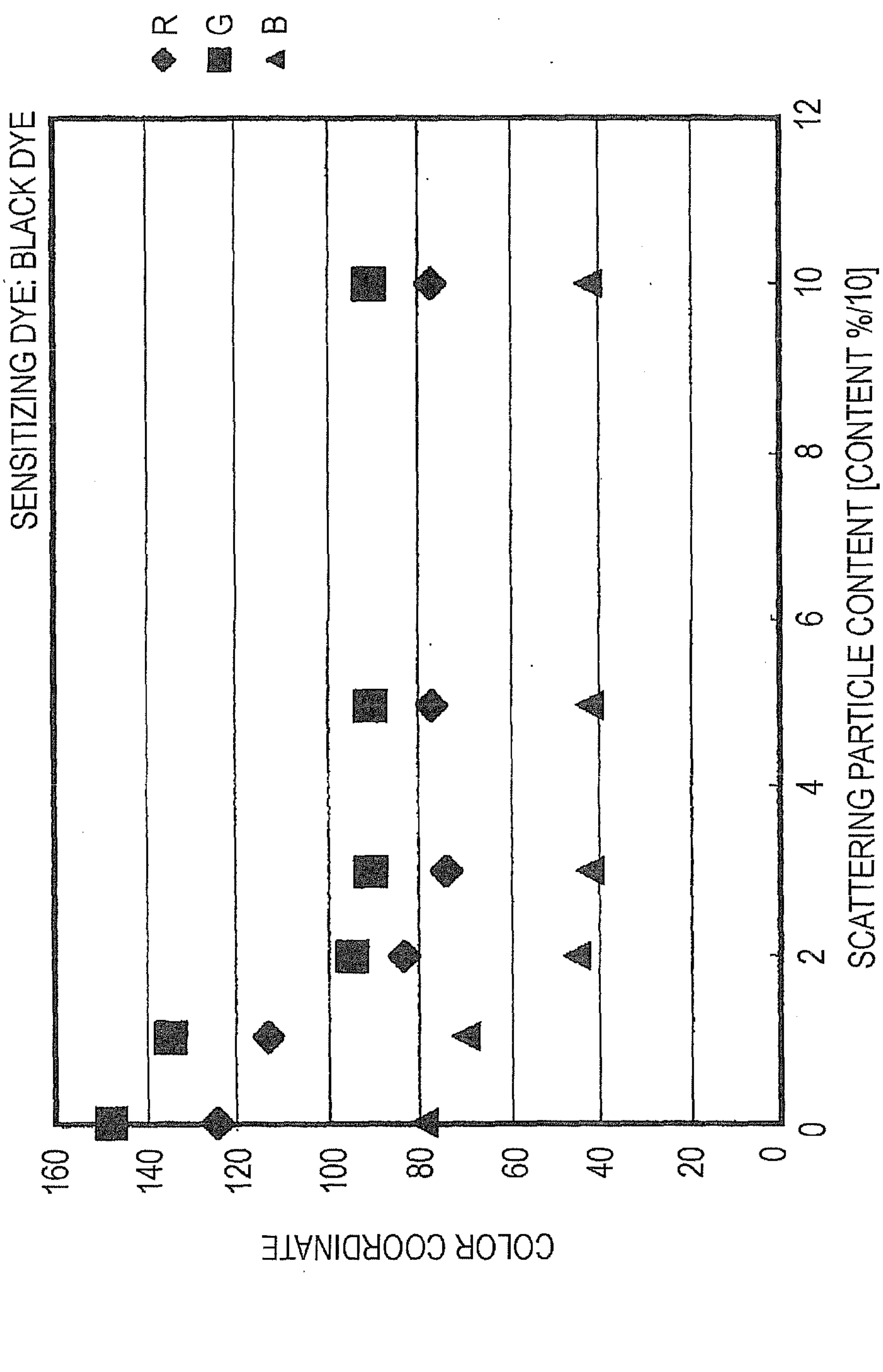
SENSITIZING DYE: BLACK DYE
COLOR COORDINATE
160
140
120
100
80
60
40
20
0
0
2
4
6
8
10
12
SCATTERING PARTICLE CONTENT [CONTENT %/10]
R
G
B

FIG. 10

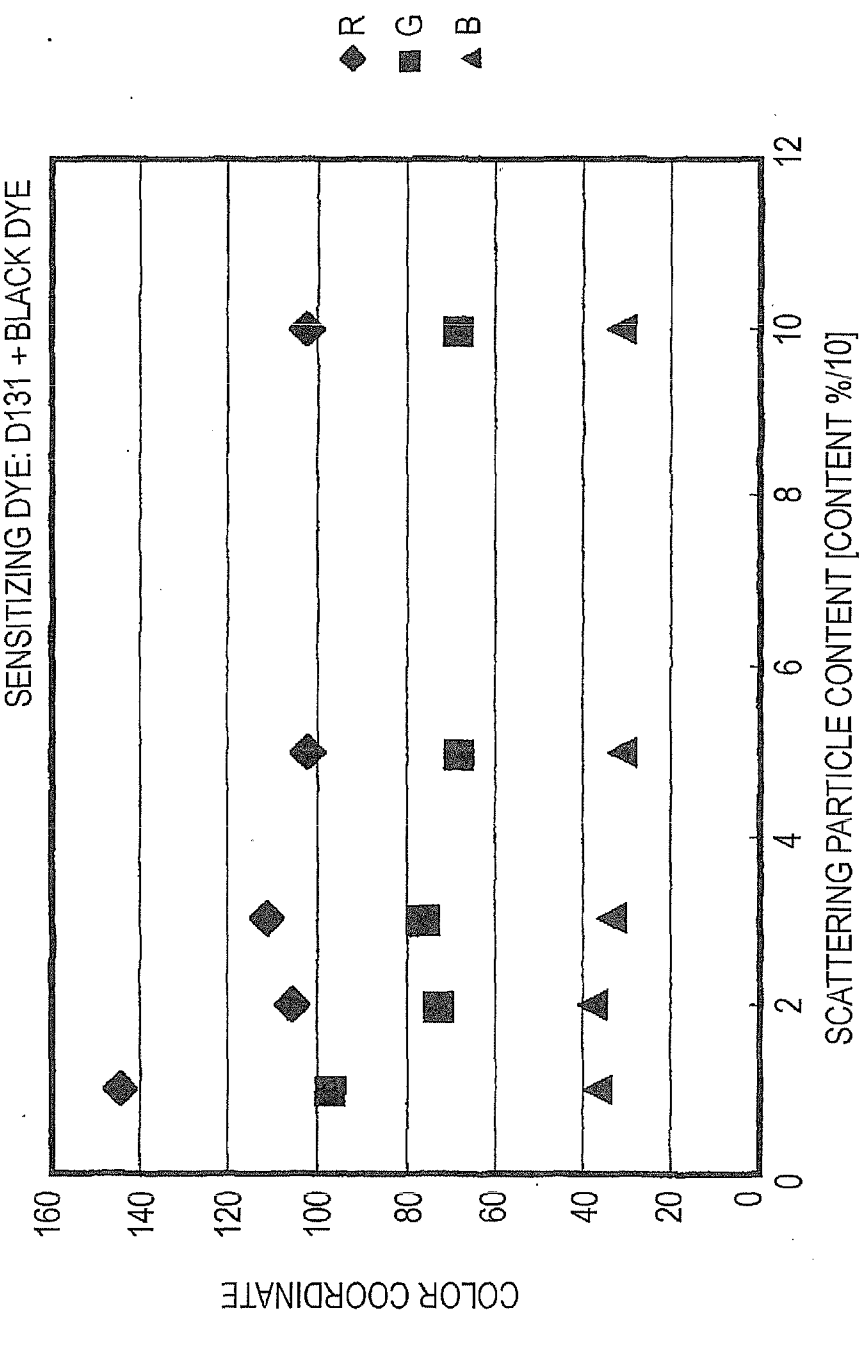
SENSITIZING DYE: D131 + BLACK DYE
COLOR COORDINATE
SCATTERING PARTICLE CONTENT [CONTENT %/10]
0
20
40
60
80
100
120
140
160
0
2
4
6
8
10
12
R
G
B

FIG. 11

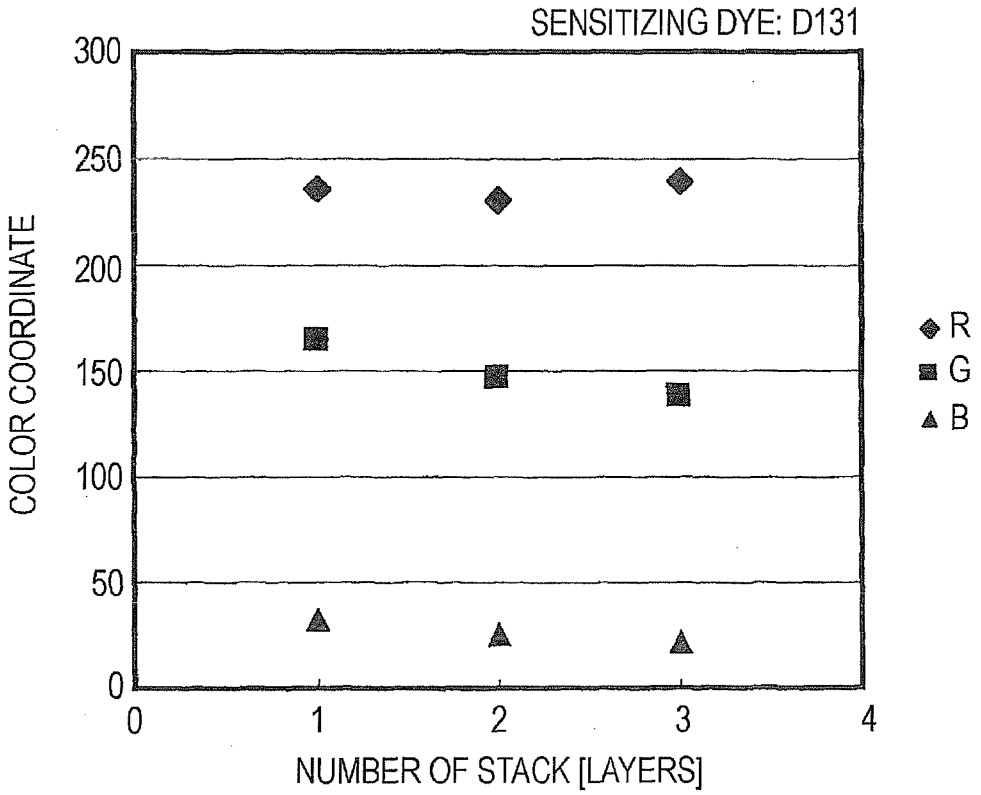
SENSITIZING DYE: D131
300
250
200
150
100
50
0
COLOR COORDINATE
0
1
2
3
4
NUMBER OF STACK [LAYERS]
R
G
B

FIG. 12

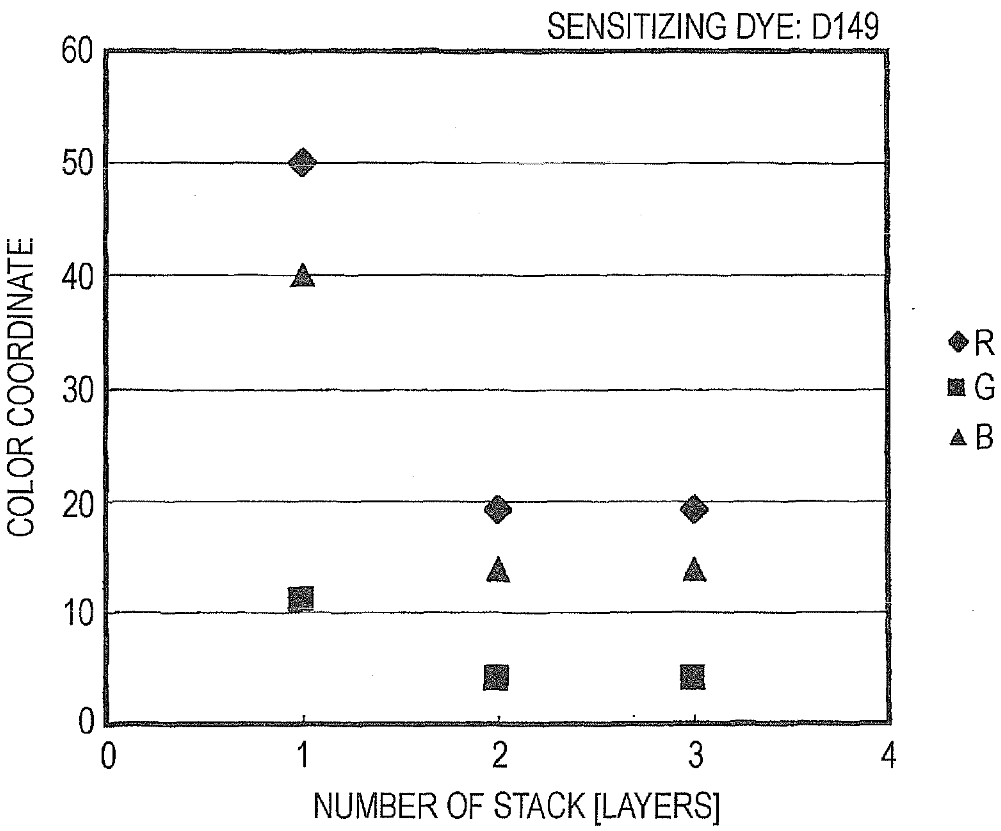
SENSITIZING DYE: D149
60
50
40
30
20
10
0
COLOR COORDINATE
0
1
2
3
4
NUMBER OF STACK [LAYERS]
R
G
B

FIG. 13

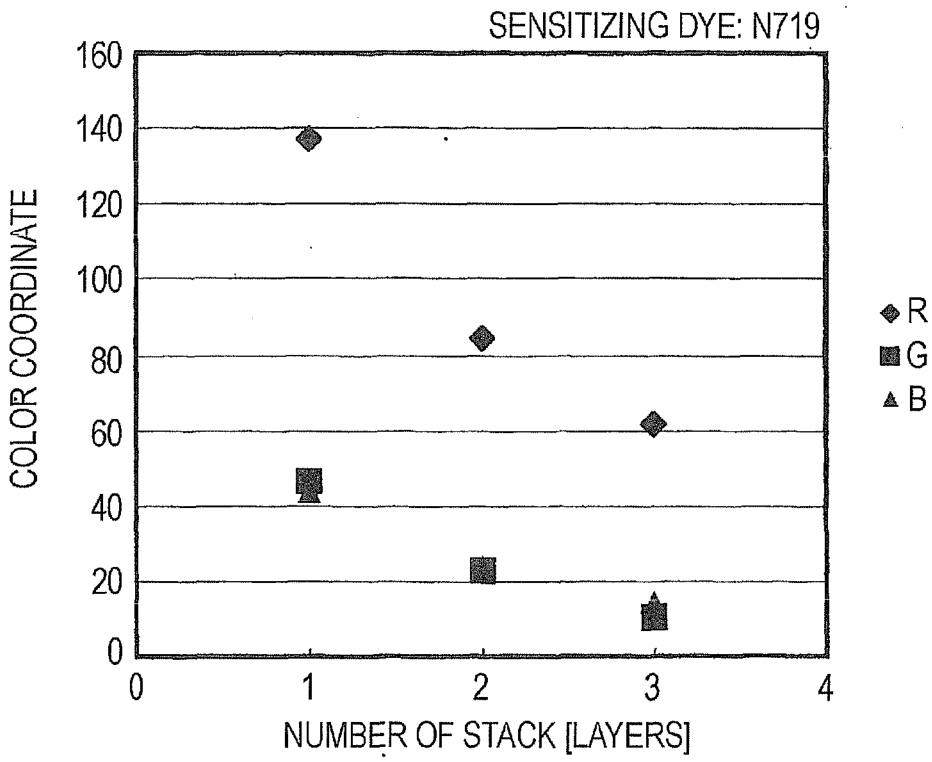
SENSITIZING DYE: N719
160
140
120
100
80
60
40
20
0
COLOR COORDINATE
0
1
2
3
4
NUMBER OF STACK [LAYERS]
R
G
B

FIG. 14

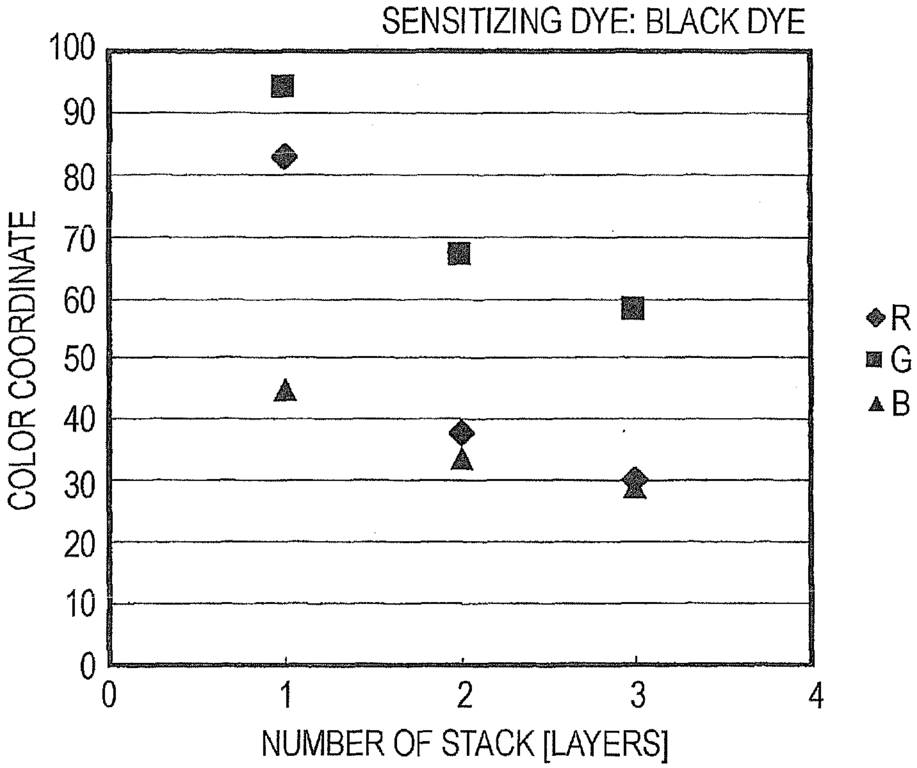
SENSITIZING DYE: BLACK DYE
100
90
80
70
60
50
40
30
20
10
0
COLOR COORDINATE
0
1
2
3
4
NUMBER OF STACK [LAYERS]
R
G
B

FIG. 15

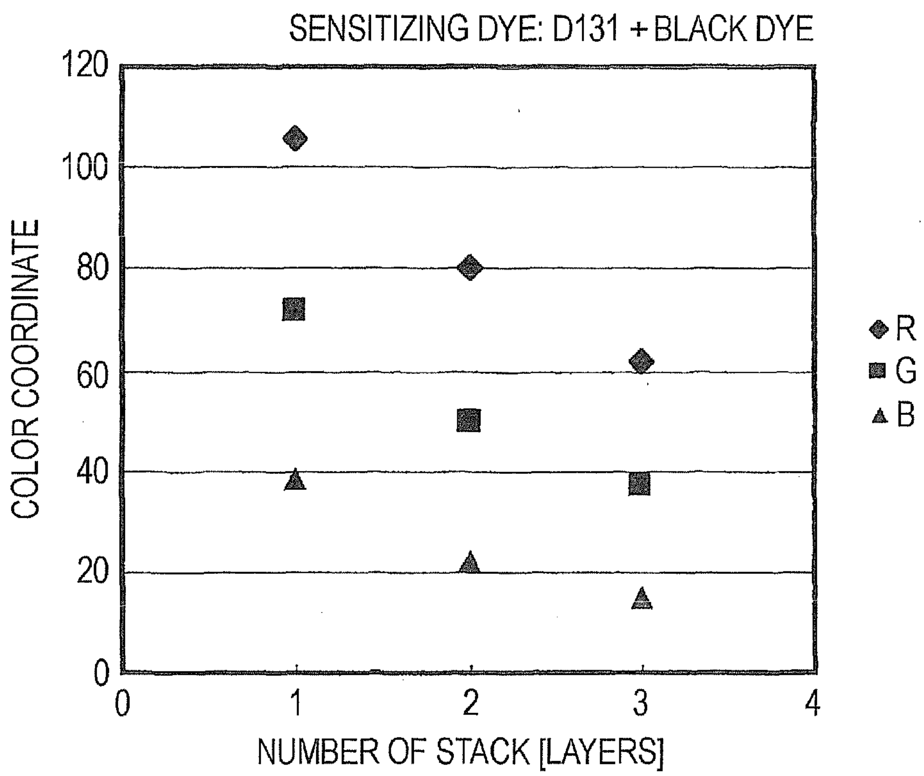
SENSITIZING DYE: D131 + BLACK DYE
120
100
80
60
40
20
0
COLOR COORDINATE
0
1
2
3
4
NUMBER OF STACK [LAYERS]
R
G
B

FIG. 16

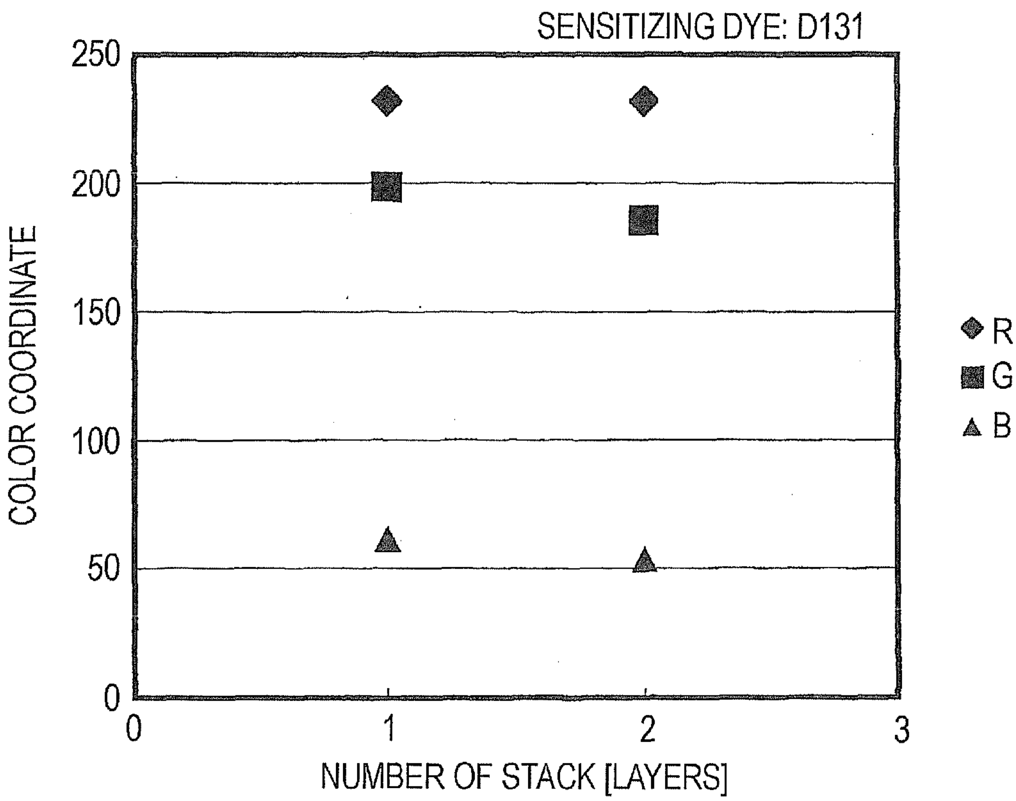
SENSITIZING DYE: D131
250
200
150
100
50
0
0
1
2
3
COLOR COORDINATE
NUMBER OF STACK [LAYERS]
R
G
B

FIG. 17

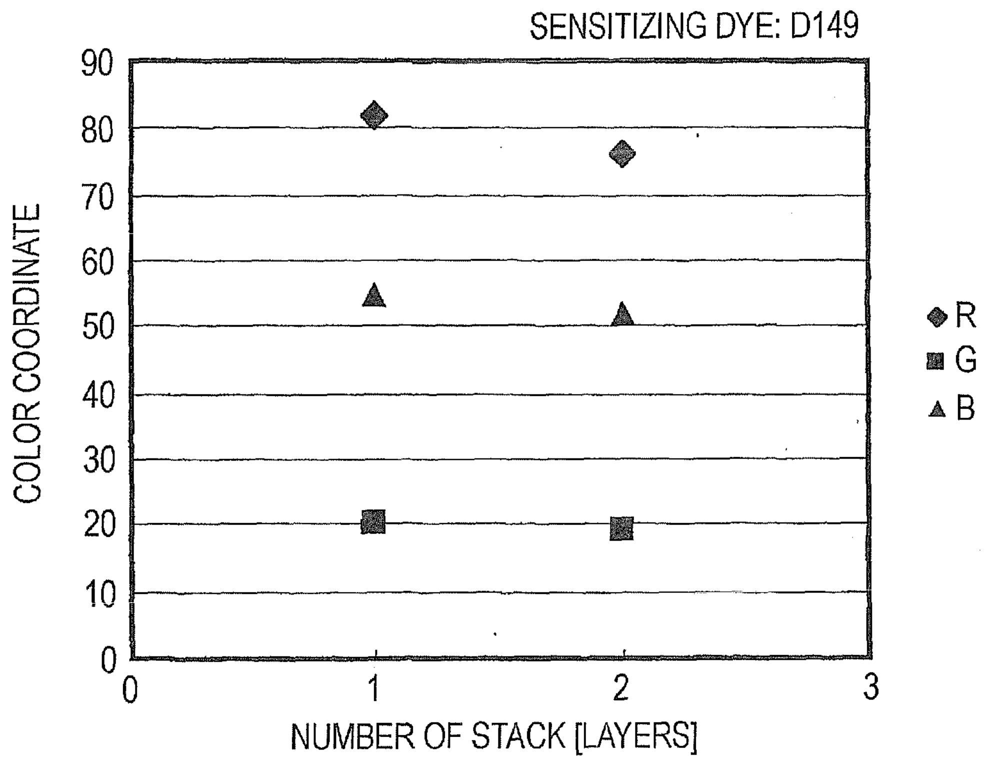
SENSITIZING DYE: D149
90
80
70
60
50
40
30
20
10
0
COLOR COORDINATE
0
1
2
3
NUMBER OF STACK [LAYERS]
R
G
B

FIG. 18

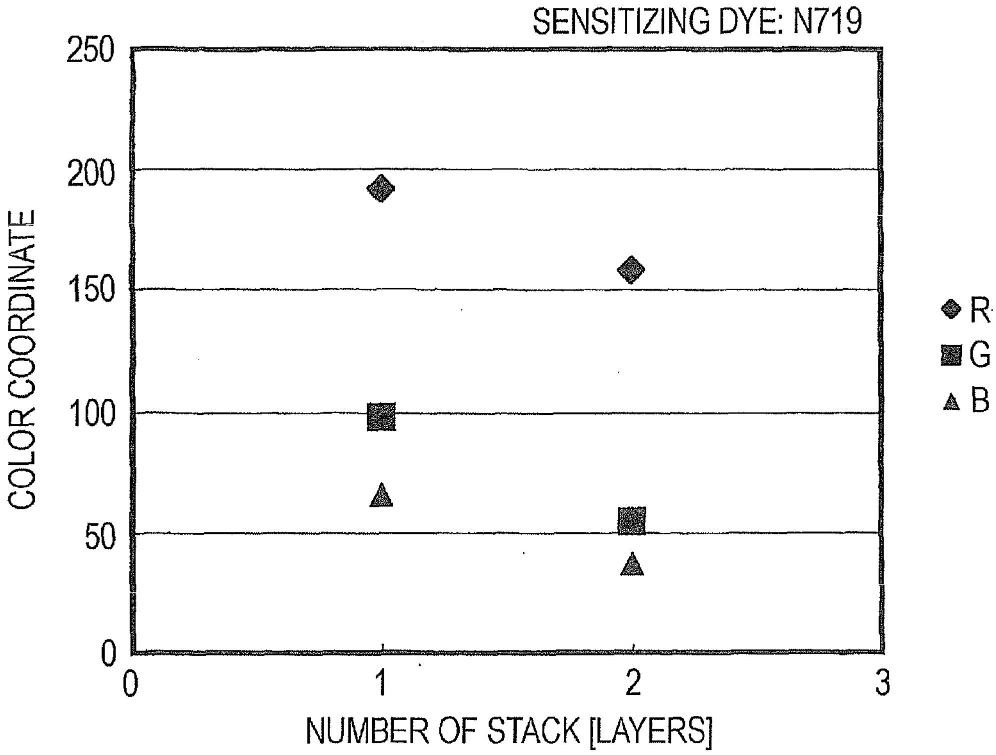
SENSITIZING DYE: N719
COLOR COORDINATE
250
200
150
100
50
0
0
1
2
3
NUMBER OF STACK [LAYERS]
R
G
B

FIG. 19

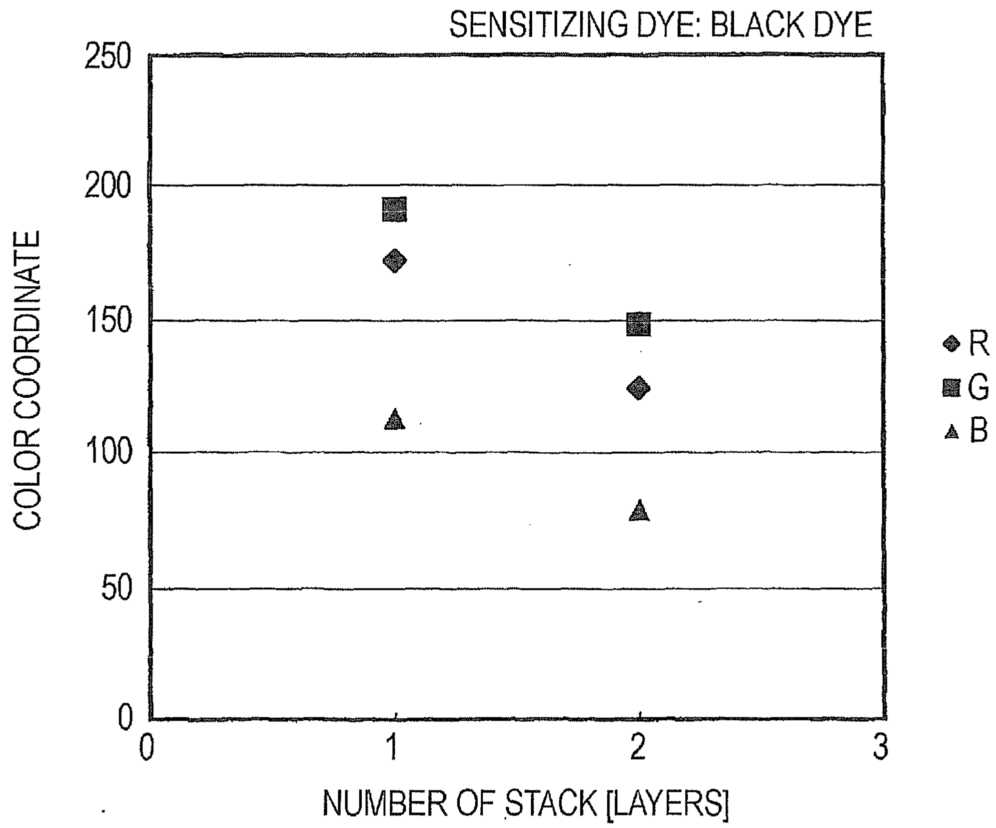
SENSITIZING DYE: BLACK DYE
250
200
150
100
50
0
0
1
2
3
COLOR COORDINATE
NUMBER OF STACK [LAYERS]
R
G
B

FIG. 20

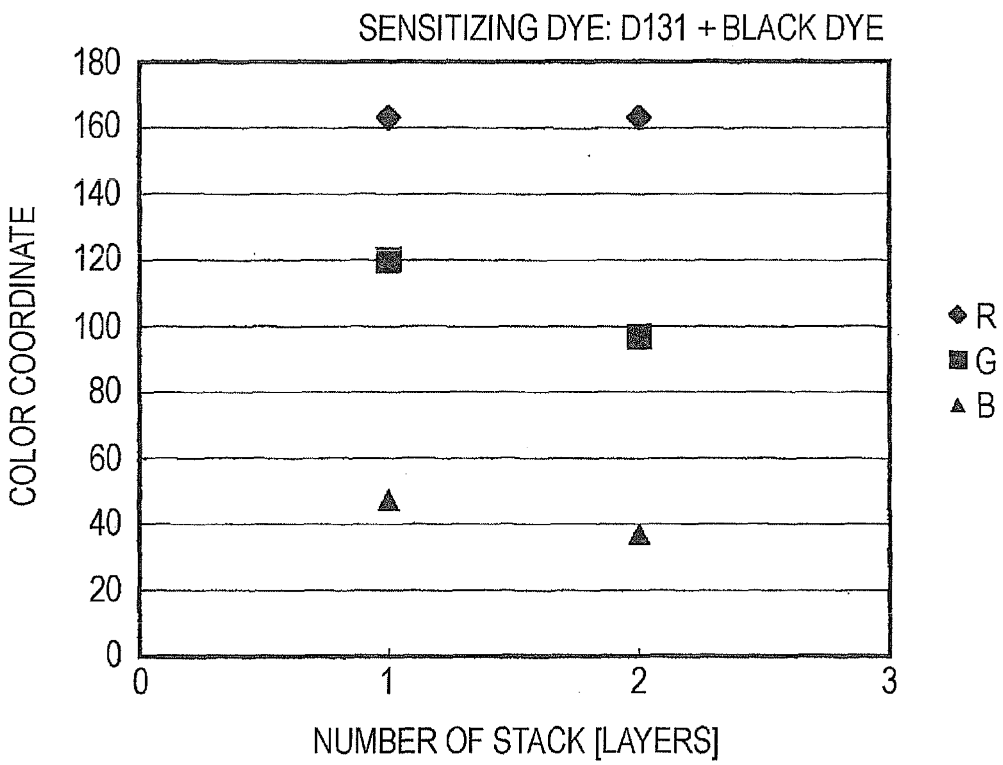
SENSITIZING DYE: D131 + BLACK DYE
180
160
140
120
100
80
60
40
20
0
COLOR COORDINATE
0
1
2
3
NUMBER OF STACK [LAYERS]
R
G
B

FIG. 21

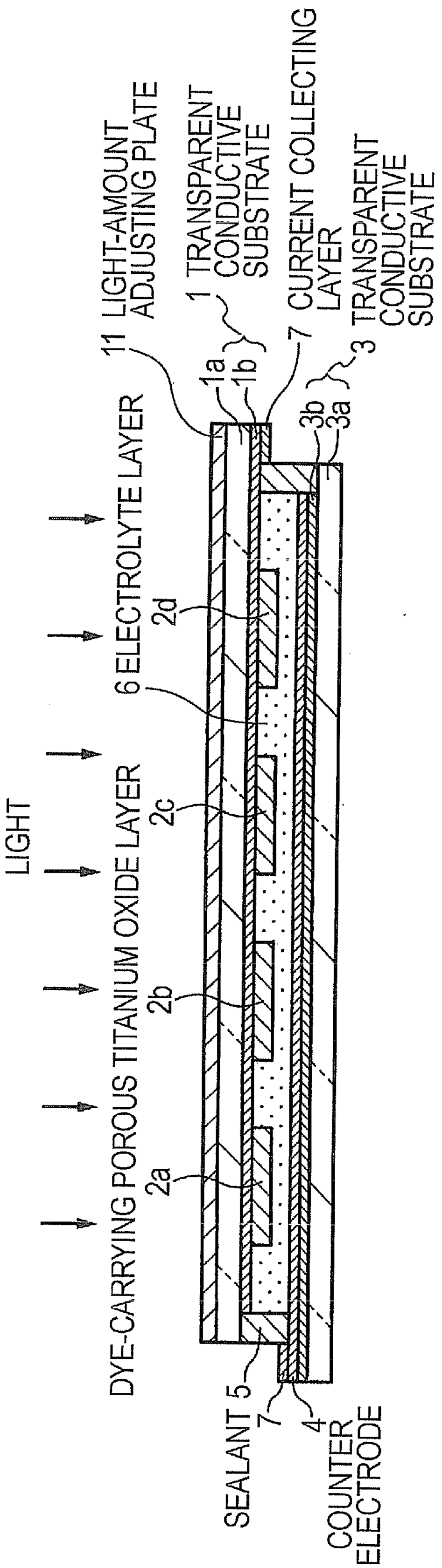

LIGHT
DYE-CARRYING POROUS TITANIUM OXIDE LAYER
6 ELECTROLYTE LAYER
11 LIGHT-AMOUNT ADJUSTING PLATE
1 TRANSPARENT CONDUCTIVE SUBSTRATE
1a
1b
7 CURRENT COLLECTING LAYER
3 TRANSPARENT CONDUCTIVE SUBSTRATE
3a
3b
2a
2b
2c
2d
SEALANT 5
7
4
COUNTER ELECTRODE

FIG. 22

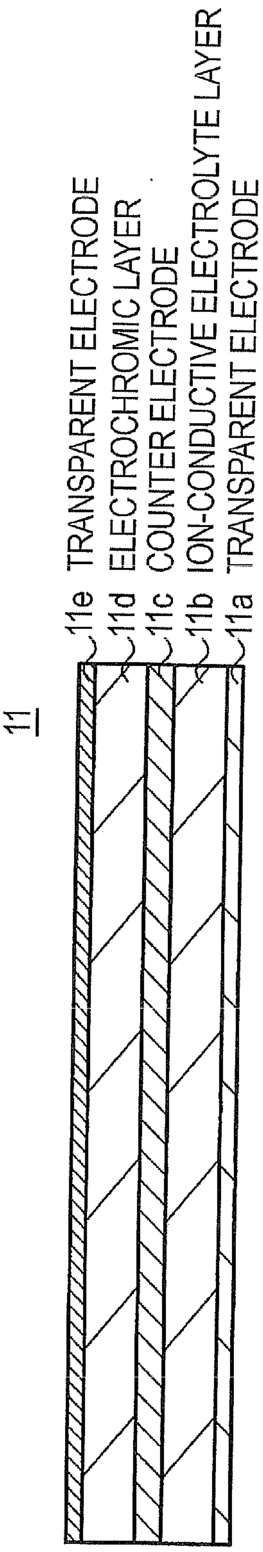
11
11e TRANSPARENT ELECTRODE
11d ELECTROCHROMIC LAYER
11c COUNTER ELECTRODE
11b ION-CONDUCTIVE ELECTROLYTE LAYER
11a TRANSPARENT ELECTRODE

## INTERNATIONAL SEARCH REPORT

International application No.
PCT/JP2009/068859

A. CLASSIFICATION OF SUBJECT MATTER
*H01M14/00*(2006.01)i, *H01L31/04*(2006.01)i

According to International Patent Classification (IPC) or to both national classification and IPC

B. FIELDS SEARCHED

Minimum documentation searched (classification system followed by classification symbols)
H01M14/00, H01L31/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-249279 A (Sharp Corp.), 05 September 2003 (05.09.2003), claims; paragraph [0058] (Family: none) | 1-5,8-13<br>6-7 |
| X<br>Y | JP 2000-268891 A (Toshiba Corp.), 29 September 2000 (29.09.2000), claims; paragraph [0018] & US 6310282 B1 | 1-5,8-13<br>6-7 |
| X<br>Y | JP 2005-346934 A (Casio Computer Co., Ltd.), 15 December 2005 (15.12.2005), claims; paragraph [0024] & US 2005/0254226 A1 | 1-5,8-13<br>6-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>11 December, 2009 (11.12.09) | Date of mailing of the international search report<br>12 January, 2010 (12.01.10) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2009/068859

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2002-75472 A (Sharp Corp.), 15 March 2002 (15.03.2002), claims (Family: none) | 1-5,8-13<br>6-7 |
| Y | JP 2006-339086 A (Sekisui Jushi Corp.), 14 December 2006 (14.12.2006), claims; fig. 1 (Family: none) | 6-7 |
| Y | JP 2007-172917 A (Fujikura Ltd.), 05 July 2007 (05.07.2007), claims; fig. 4 (Family: none) | 6-7 |

Form PCT/ISA/210 (continuation of second sheet) (April 2007)

**INTERNATIONAL SEARCH REPORT**

International application No.
PCT/JP2009/068859

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

In order that a group of inventions described in the scope of claims satisfy the requirement of unity of invention, existence of a special technical feature for linking said group of inventions so as to form a single general inventive concept is necessitated. A group of inventions in claims 1 - 13 are considered to be linked with each other by only the matter described in claim 1.

However, the matter cannot be a special technical feature, since the matter is described in prior-art documents, for example, JP 2003-249279 A (Sharp Corp.), 5 September 2003 (05.09.2003).

(continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.
PCT/JP2009/068859

Continuation of Box No.III of continuation of first sheet(2)

Therefore, there is no special technical feature for linking inventions so as to form a single general inventive concept among a group of the inventions in claims 1 - 13. In conclusion, it is obvious that a group of inventions in claims 1 - 13 do not satisfy the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Nature,* 1991, vol. 353, 737